(19) Europäisches Patentamt / European Patent Office / Office européen des brevets

(11) **EP 2 947 799 B1**

(12) **FASCICULE DE BREVET EUROPEEN**

(45) Date de publication et mention de la délivrance du brevet:
**05.12.2018 Bulletin 2018/49**

(51) Int Cl.:
***H04L 1/00*** *(2006.01)*    ***H04L 25/03*** *(2006.01)*

(21) Numéro de dépôt: **15168970.0**

(22) Date de dépôt: **22.05.2015**

(54) **PROCÉDÉ DE TURBO-ÉGALISATION LINÉAIRE AU SENS LARGE DANS UN CONTEXTE MULTI-UTILISATEURS ET POUR UN RÉCEPTEUR MULTI-VOIES**

VERFAHREN ZUR IM WEITEREN SINNE LINEAREN TURBOENTZERRUNG IN EINEM SYSTEM MIT MEHREREN NUTZERN UND FÜR EINEN MEHRANTENNEN-EMPFÄNGER

METHOD OF WIDELY LINEAR TURBO-EQUALISATION IN A MULTI-USER SYSTEM AND FOR A MULTI-ANTENNA RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.05.2014 FR 1401178**

(43) Date de publication de la demande:
**25.11.2015 Bulletin 2015/48**

(73) Titulaire: **THALES**
**92400 Courbevoie (FR)**

(72) Inventeurs:
- **CIPRIANO, Antonio**
  **92622 GENNEVILLIERS Cedex (FR)**
- **GOUBET, Olivier**
  **92622 GENNEVILLIERS Cedex (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
- **MELANIE WITZKE: "Filtrage Linéaire et Linéaire au Sens Large Appliqué GBP A LA Détection Itérative de Signaux Dans ub Syst GBP eme Généralisé GBP A Entrées et Sorties Multiples ; Linear and widely linear filtering applied to iterative detection of generalized MIMO signals",** ANNALS OF TELECOMMUNICATIONS - ANNALES DES TÃ CR LÃ CR COMMUNICATIONS, SPRINGER-VERLAG, PARIS, vol. 60, no. 1 - 2, 1 février 2005 (2005-02-01), pages 147-168, XP019968336, ISSN: 1958-9395, DOI: 10.1007/BF03219811
- **XIAOJUN YUAN ET AL: "Low-Complexity Iterative Detection in Multi-User MIMO ISI Channels",** IEEE SIGNAL PROCESSING LETTERS, IEEE SERVICE CENTER, PISCATAWAY, NJ, US, vol. 15, 1 janvier 2008 (2008-01-01), pages 25-28, XP011202806, ISSN: 1070-9908
- **Dietl, Mensing, Utschick: "Iterative Detection Based on Widely Linear Processing and Real-Valued Symbol Alphabets",** Institute for Circuit Theory and Signal Processing 11th European Wireless Conference 2005 - Next Generation Wireless and Mobile Communications and Services (European Wireless), avril 2005 (2005-04), pages 1-5, XP002738242, VDE ISBN: 978-3-8007-2886-2 Extrait de l'Internet: URL:http://ieeexplore.ieee.org/stamp/stamp .jsp ?tp=&arnumber=5755268 [extrait le 2015-04-09]

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **ABE T ET AL: "Space-time turbo equalization and symbol detection in frequency selective MIMO channels", IEEE 54TH VEHICULAR TECHNOLOGY CONFERENCE. VTC FALL 2001. PROCEEDINGS 7-11 OCT. 2001 ATLANTIC CITY, NJ, USA; [IEEE VEHICULAR TECHNOLGY CONFERENCE], IEEE, IEEE 54TH VEHICULAR TECHNOLOGY CONFERENCE. VTC FALL 2001. PROCEEDINGS (CAT. NO.01CH37211) IEEE P, vol. 2, 7 octobre 2001 (2001-10-07), pages 1230-1234, XP010562628, DOI: 10.1109/VTC.2001.956972 ISBN: 978-0-7803-7005-0**

**Description**

Le domaine de l'invention est celui des systèmes de communications numériques par voie radio et plus particulièrement les récepteurs de communications multi-voies, c'est-à-dire comprenant plusieurs antennes de réception.

L'invention concerne également les systèmes multi-utilisateurs dans lesquels les ressources de communications sont partagées entre plusieurs utilisateurs qui peuvent communiquer simultanément par un partage de bandes fréquentielles ou de slots temporels.

Plus généralement l'invention concerne tous les systèmes de communication multi-utilisateurs dans lesquels de forts niveaux d'interférence sont générés à la fois entre des émetteurs associés à des utilisateurs différents mais également entre les symboles véhiculés par un signal transmis par un utilisateur du fait des perturbations inhérentes au canal de propagation.

Afin de supprimer ou au moins limiter l'interférence générée sur le signal reçu, il est connu de mettre en oeuvre un procédé d'égalisation au sein du récepteur. Cette fonctionnalité a pour but de nettoyer le signal reçu des diverses sources d'interférences avant son décodage.

Dans ce contexte, l'invention concerne précisément le domaine de l'égalisation de signaux dans un contexte multi-utilisateurs et également le domaine de la turbo-égalisation qui consiste en l'itération des fonctions d'égalisation et de décodage dans l'objectif final d'améliorer le taux d'erreur bit ou le taux d'erreur paquet sur les symboles décodés.

L'invention trouve notamment son application dans les systèmes de communication cellulaires tels que le système 3GPP LTE.

L'invention a notamment pour objectif la conception d'un turbo-égaliseur basé sur un filtre d'égalisation linéaire au sens large. Un tel filtre présente la propriété de traiter séparément la partie réelle et la partie imaginaire du signal de sorte à exploiter au mieux toute l'information contenue dans le signal afin d'améliorer les performances d'égalisation. Un égaliseur linéaire au sens large présente des performances améliorées plus particulièrement pour des signaux modulés à partir d'une constellation réelle ou d'une constellation complexe ayant la propriété de non-circularité.

L'invention vise également une méthode d'égalisation dans le domaine fréquentiel et qui soit adaptée à un contexte multi-utilisateurs.

Le domaine de l'égalisation de signaux soumis à interférence inter symboles ou inter utilisateurs a fait l'objet de nombreuses publications. Parmi celles-ci, on peut citer les références [1] à [6] (voir références en fin de description).

On peut citer en outre le document "Linear and widely linear filtering applied to iterative détection of generalized MIMO signais", Annals of Telecommunications, Spirnger-Verlag, Melanie Witzke, ainsi que le document "Low-complexity iterative détection in multi-user MIMO ISI channels", IEEE signal processing letters, IEEE, vol 15, Xiaojun Yuan et al.

Les méthodes d'égalisation connues ne permettent cependant pas de prendre en compte conjointement les trois aspects suivants :

- L'utilisation d'une technique de filtrage linéaire au sens large qui consiste à appliquer un filtre égaliseur à la fois au signal complexe reçu mais aussi à son conjugué,
- La mise en oeuvre de l'égalisation dans le domaine fréquentiel,
- La gestion de contraintes multi-utilisateurs, autrement dit la gestion de l'égalisation de l'interférence multi-utilisateurs et non seulement l'interférence inter symboles pour un utilisateur unique.

Lorsque cette technique est employée, elle l'est le plus souvent pour des applications mono-utilisateurs et pour des traitements réalisés dans le domaine temporel.

L'invention propose, afin d'améliorer les méthodes d'égalisation connues, une méthode d'égalisation linéaire au sens large qui vise à supprimer l'interférence entre plusieurs utilisateurs et qui s'applique dans le domaine fréquentiel.

L'invention est particulièrement avantageuse lorsque le signal est modulé à l'aide d'une constellation réelle ce qui implique que la matrice de pseudo-corrélation du signal est non nulle et peut être exploitée pour améliorer le filtre d'égalisation.

A cet effet, l'invention a pour objet un procédé d'égalisation d'un signal reçu par une pluralité d'éléments antennaires, ledit signal reçu étant issu de la transmission de signaux émis par une pluralité d'émetteurs, ledit procédé comprenant :

- Une étape de conversion du signal reçu dans le domaine fréquentiel,
- Une étape de soustraction, audit signal, d'une estimée de l'interférence entre symboles et de l'interférence entre utilisateurs, de sorte à obtenir un signal correctif complexe,
- Une étape de filtrage linéaire au sens large dudit signal correctif complexe et du signal correctif complexe conjugué conjointement pour obtenir un signal égalisé,
- Une étape de conversion du signal correctif égalisé dans le domaine temporel,
- Une étape de calcul des coefficients du filtre égaliseur à partir de la matrice de covariance et de la matrice de pseudo-covariance du signal reçu.

Selon une variante particulière de réalisation, le procédé d'égalisation d'un signal reçu selon l'invention comprend en outre :

- Une étape de soustraction audit signal reçu d'une estimée du signal émis et
- Une étape de combinaison du signal égalisé avec une estimée du signal émis,
- L'étape de filtrage linéaire au sens large étant configurée pour produire, à partir d'un nombre $N_R$, égal au nombre d'éléments antennaires, de signaux correctifs complexes, un nombre K, égal au nombre de signaux émis, de signaux correctifs complexes égalisés.

Selon un aspect particulier de l'invention, l'étape de filtrage linéaire au sens large comprend le filtrage dudit signal correctif complexe par un premier filtre égaliseur et du signal correctif complexe conjugué par un second filtre égaliseur.

Selon un aspect particulier de l'invention, l'étape de filtrage linéaire au sens large comprend le filtrage dudit signal correctif complexe par un filtre égaliseur et ledit procédé d'égalisation comporte en outre une étape d'extraction de la partie réelle de chaque valeur du signal égalisé converti dans le domaine temporel.

Selon un aspect particulier de l'invention, l'étape de filtrage linéaire au sens large comprend le filtrage dudit signal correctif complexe par un filtre égaliseur et ledit procédé d'égalisation comporte en outre une étape d'extraction, alternativement, de la partie réelle ou de la partie imaginaire de chaque valeur successive du signal égalisé converti dans le domaine temporel.

Selon un aspect particulier de l'invention, l'étape de calcul des coefficients du filtre égaliseur comporte au moins :

- Une sous-étape de calcul du filtre égaliseur dans le domaine fréquentiel et de calcul d'une estimée de l'amplitude des symboles du signal émis,
- Une sous-étape de calcul des covariances et pseudo-covariances du signal après égalisation.

L'invention a également pour objet un procédé de turbo-égalisation d'un signal reçu comprenant l'exécution itérative des étapes suivantes :

- Une étape d'exécution du procédé d'égalisation d'un signal reçu selon l'invention,
- Une étape de transformation des signaux égalisés en bits démodulés,
- Une étape de décodage des bits démodulés,
- Une étape de transformation des bits décodés en estimée du signal émis.

L'invention concerne également l'utilisation du procédé d'égalisation d'un signal reçu ou du procédé de turbo-égalisation selon l'invention appliqué à un signal modulé selon une constellation réelle, par exemple une constellation du type BPSK ou M-PAM.

L'invention concerne également l'utilisation du procédé d'égalisation d'un signal reçu ou du procédé de turbo-égalisation selon l'invention appliqué à un signal modulé selon une constellation alternativement réelle ou imaginaire, par exemple une constellation du type $\pi/2$-BPSK ou $\pi/2$-M-PAM.

L'invention a également pour objet un programme d'ordinateur comportant des instructions pour l'exécution du procédé d'égalisation d'un signal reçu ou du procédé de turbo-égalisation selon l'invention, lorsque le programme est exécuté par un processeur et un récepteur comportant une pluralité d'éléments antennaires pour recevoir un signal émis par une pluralité d'émetteurs et un processeur configuré pour exécuter le procédé d'égalisation d'un signal reçu ou le procédé de turbo-égalisation selon l'invention.

D'autres caractéristiques et avantages de la présente invention apparaîtront mieux à la lecture de la description qui suit en relation aux dessins annexés qui représentent :

- La figure 1, un schéma d'un système de communication multi-utilisateurs comprenant un récepteur à antennes multiples,
- La figure 2, un schéma-bloc d'un émetteur destiné à fonctionner en coopération avec un récepteur comprenant un turbo-égaliseur selon l'invention,
- La figure 3, un schéma-bloc d'un récepteur selon l'invention,
- La figure 4, un schéma-bloc d'un turbo-égaliseur selon l'invention selon une première variante d'implémentation,
- La figure 5, un schéma détaillant la fonction d'égalisation d'un symbole au sein du turbo-égaliseur selon la figure 4,
- La figure 6, un schéma détaillant la fonction de suppression d'interférences au sein de la fonction d'égalisation de la figure 5,

- La figure 7, un schéma détaillant la fonction de filtrage linéaire au sens large au sein de la fonction d'égalisation de la figure 5,
- La figure 8, un schéma-bloc d'un turbo-égaliseur selon l'invention selon une seconde variante d'implémentation,
- La figure 9, un schéma détaillant la fonction de génération d'un signal correctif au sein du turbo-égaliseur selon la figure 8,
- La figure 10, un schéma détaillant la fonction de filtrage linéaire au sens large au sein du turbo-égaliseur selon la figure 8 et selon une première variante d'implémentation,
- La figure 11, un schéma détaillant la fonction de filtrage linéaire au sens large au sein du turbo-égaliseur selon la figure 8 et selon une seconde variante d'implémentation,
- La figure 12, un schéma détaillant la fonction de combinaison avec estimée du signal utile au sein du turbo-égaliseur selon la figure 8 pour le cas général d'un signal modulé selon une constellation complexe,
- La figure 13, un schéma détaillant la fonction de combinaison avec estimée du signal utile au sein du turbo-égaliseur selon la figure 8 pour le cas particulier d'un signal modulé selon une constellation réelle,
- La figure 14, un schéma-bloc de la fonction de calcul des coefficients de l'égaliseur dans le cas général d'un signal modulé selon une constellation complexe,
- La figure 15, un schéma-bloc de la fonction de calcul des coefficients de l'égaliseur dans le cas particulier d'un signal modulé selon une constellation réelle,
- La figure 16, un schéma détaillant à nouveau la fonction de génération d'un signal correctif au sein du turbo-égaliseur selon la figure 8 dans le cas de constellations particulières,
- La figure 17, un schéma détaillant la fonction de filtrage linéaire au sens large au sein du turbo-égaliseur selon la figure 8 et dans le cas de constellations particulières,
- La figure 18, un diagramme du taux d'erreur paquet en fonction du rapport signal à bruit exprimé en décibels dans un système de type SC-FDMA à 1 antenne de réception avec un canal de propagation de type ETU pour un turbo-égaliseur linéaire selon l'art antérieur couplé avec une modulation QPSK et un code convolutif de taux égal à 1/3 et un turbo-égaliseur linéaire au sens large selon l'invention couplé avec une modulation 4-PAM et un code convolutif de taux égal à 1/3,
- La figure 19, un diagramme du taux d'erreur paquet en fonction du rapport signal à bruit exprimé en décibels dans un système de type SC-FDMA à 2 antennes de réception avec un canal de propagation de type ETU pour un turbo-égaliseur linéaire selon l'art antérieur couplé avec une modulation QPSK et un code convolutif de taux égal à 1/3 et un turbo-égaliseur linéaire au sens large selon l'invention couplé avec une modulation 4-PAM et un code convolutif de taux égal à 1/3.

Tout au long de la description de l'invention, les notations suivantes seront utilisées.

Les variables désignées par une lettre minuscule, tel que x, désignent un scalaire;

Les variables désignées par une lettre minuscule en caractère gras, tel que **x,** désignent un vecteur;

Les variables désignées par une lettre majuscule en caractère gras, tel que **X,** désignent une matrice;

$[\mathbf{x}_i]_{i=1..N}$ est un vecteur contenant les coefficients $x_i$;

$\left[\mathbf{X}_{i,j}\right]_{\substack{i=1\ldots N_R \\ j=1\ldots K}}$ est une matrice par bloc qui contient les matrices $\mathbf{X}_{i,j}$;

diag(**x**) est une matrice diagonal avec les coefficients **x** sur sa diagonale;

circ(**x**) est une matrice circulante avec sa première colonne égale à **x;**

E[X] désigne l'espérance de la variable aléatoire X;

$\otimes$ désigne le produit de Kroenecker entre deux matrices ;

$\mathbf{x}^T$ est le vecteur transposé de **x** ;

$\mathbf{X}^T$ est la matrice transposée de **X** ;

$\mathbf{x}^H$ est le vecteur hermitien de **x,** c'est-à-dire le vecteur transposé et conjugué de **x** ;

$\mathbf{X}^H$ est la matrice hermitienne de **X,** c'est-à-dire la matrice transposée et conjuguée de **X** ;

tr(**X**) est la trace de la matrice **X;**

$\mathbf{I}_N$ est la matrice identité de taille NxN

$\mathbf{F}_M$ est la matrice de transformée de Fourier de taille MxM, l'entrée k,l de cette matrice est égale à

$$[\mathbf{F}_M]_{k,l} = \frac{1}{\sqrt{M}} exp\left(-\frac{2j\pi kl}{M}\right),$$

k = 0... M-1 et l = 0...M-1. L'inverse de la matrice de transformée de Fourier coïncide avec sa transposée conjugué : $\mathbf{F}_M^H$ .

Par la suite, le terme mapping sera utilisé pour désigner la transformation d'un ou plusieurs bits vers un symbole de la constellation de la modulation utilisée pour mettre en forme le signal.

Le terme demapping sera utilisé pour désigner la transformation inverse à l'opération de mapping à savoir la transformation d'un symbole modulé vers un ou plusieurs bits selon la constellation utilisée.

L'expression mapping souple désigne l'opération de mapping lorsque celle-ci est exécutée pour des bits dits souples, autrement dits des bits représentés par une valeur non binaire, typiquement comprise entre 0 et 1 qui est caractéristique de leur probabilité de vraisemblance.

L'expression demapping souple désigne l'opération inverse à l'opération de mapping souple.

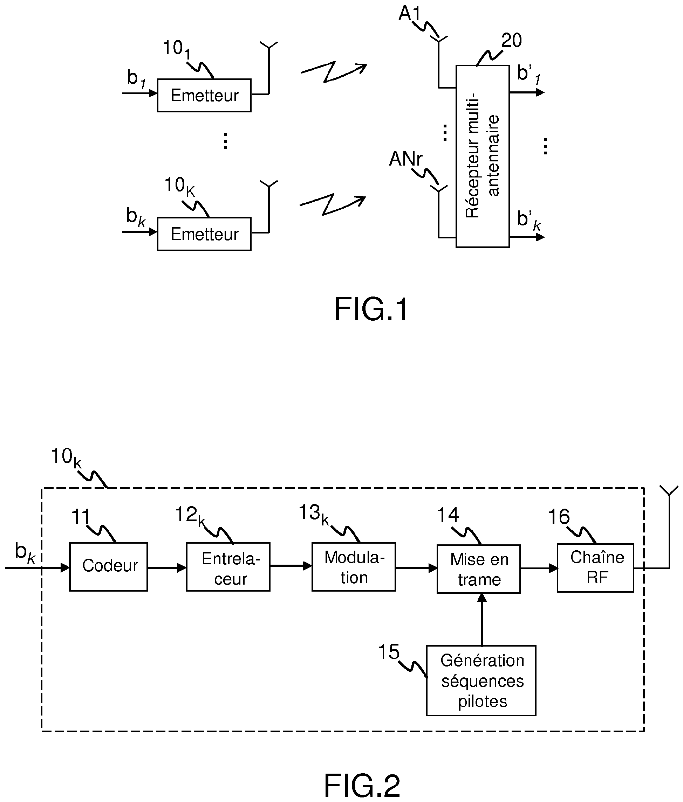

La figure 1 schématise le système de communications considéré par l'invention. Il s'agit d'un système de transmission sans fil multi-utilisateurs comprenant une pluralité d'émetteurs $10_1,...10_K$ chacun transmettant un signal radio à destination d'un même récepteur 20 qui est doté d'une pluralité d'antennes de réception $A_1,...A_{Nr}$, avec Nr le nombre d'antennes au moins égal à 1. Les émetteurs $10_1,...10_K$ transmettent chacun un signal en exploitation les mêmes ressources temporelles et fréquentielles ce qui engendre une interférence entre utilisateurs du point de vue du récepteur 20. K est égal au nombre d'émetteurs ou d'utilisateurs.

Le système décrit à la figure 1 est usuellement désigné par système MIMO (Multiple Input Multiple Output) distribué.

La figure 2 décrit un exemple d'émetteur $10_k$ compatible du système visé par l'invention. Il convient de noter que l'invention porte précisément sur un procédé d'égalisation mis en oeuvre par un récepteur 20 et ne comporte pas d'étapes exécutées par un émetteur. Cependant, le type d'émetteur envisagé est décrit uniquement à titre d'exemple et ce afin de faciliter la compréhension générale de l'invention. Les fonctionnalités présentées sur la figure 2 peuvent être rendues en partie optionnelles et plus généralement l'émetteur décrit peut être remplacé par d'autres types d'émetteurs.

L'émetteur $10_k$ reçoit en entrée des bits d'information qui sont codés avec un codeur correcteur d'erreur 11 qui peut être un code convolutif, un code turbo, un code LDPC ou tout autre code pour lequel il existe un algorithme de décodage qui produit des informations souples, c'est-à-dire des informations non binaires. Les bits codés en sortie du codeur 11 sont entrelacés avec un entrelaceur $12_k$ qui peut être différent pour chaque émetteur $10_1,...10_K$.

Les bits entrelacés sont ensuite modulés par un modulateur $13_k$ qui peut être différent d'un utilisateur à l'autre. Le modulateur $13_k$ fournit en sortie des symboles appartenant à une constellation donnée définie en fonction du type de modulation choisie. Comme cela sera décrit plus en détail par la suite, l'invention présente des performances améliorées notamment pour des constellations réelles, c'est-à-dire pour lesquelles les symboles modulés présentent une partie imaginaire nulle.

Plus généralement l'invention permet d'obtenir des résultats améliorés par rapport aux techniques d'égalisation linéaire connues lorsque la constellation utilisée pour la modulation du signal émis a une propriété dite de non-circularité. La propriété de non-circularité s'exprime formellement par le fait que si $s(n)$ est un symbole aléatoire de la constellation émis à l'instant $n$, alors l'espérance de ce symbole au carré est différente de zéro $E[s^2(n)] \neq 0$. La quantité $E[s^2(n)]$ est appelé aussi pseudo-covariance dans la littérature. Cette propriété s'étend également aux signaux échantillonnés ou continus. Pour les vecteurs représentant une portion de signal, la pseudo-corrélation s'écrit $E[\mathbf{s}\,\mathbf{s}^T]$. L'invention s'applique avantageusement lorsque cette pseudo-corrélation présente une valeur non nulle.

Les constellations réelles, appelées aussi constellations rectilignes (à valeurs réelles) comme la modulation Binary Phase Shift Keying (BPSK) (modulation de phase binaire), ou les modulations d'amplitude Pulse Amplitude Modulation (PAM), sont non-circulaires. L'invention peut être appliquée aussi à des constellations réelles tournées périodiquement comme la π/2-BPSK, qui alterne sur chaque symbole modulé une constellation BPSK classique {+1, -1} et une constellation BPSK tournée de π/2 radians {+j, -j}.

L'invention peut également s'appliquer à des constellations appelées quasi-rectilignes, c'est-à-dire des constellations dont les symboles peuvent être obtenus par filtrage complexe d'un signal décrit par les symboles d'une constellation réelle. Des exemples de telles modulations sont la Minimum Shift Keying (MSK), la Gaussian Minimum Shift Keying (GMSK), les modulations de phase continue Continuous Phase Modulation (CPM) avec alphabet binaire ou l'Offset Quadrature Amplitude Modulation (OQAM). L'invention peut s'appliquer également à des symboles complexes non-circulaires, comme par exemple les constellations QAM rectangulaires qui n'ont pas de symétrie circulaire (exemple la 8-QAM).

Plus généralement, l'invention s'applique avantageusement aux modulations qui présentent la propriété de non-circularité. L'invention peut s'appliquer également aux modulations qui ne présentent pas cette propriété mais l'amélioration des performances d'égalisation sera dans ce cas négligeable.

Les symboles modulés sont transmis ensuite à un bloc de mise en trame 14 qui organise les données par blocs dans une trame et peut aussi insérer des séquences pilotes qui serviront, par exemple, au récepteur pour l'estimation du canal. Les séquences pilotes sont générées par un module 15. De plus, le bloc 14 implémente une méthode de périodisation partielle des blocs de données, qui permet au récepteur d'implémenter un égaliseur dans le domaine fréquentiel. Par exemple, le bloc 14 peut mettre en place une modulation Orthogonal Frequency Division Multiplexing (OFDM) avec un total de $N$ sous-porteuses dont $M$ sous-porteuses utilisées avec un préfixe CP et éventuellement un suffixe cyclique CS. Le bloc 14 peut mettre en place une modulation Single Carrier-Frequency Division Multiple Access (SC-FDMA), avec $M$ le nombre de sous-porteuses utilisées pour le précodage avec une transformée de Fourier discrète (Discrete Fourier Transform - DFT). Ici aussi le préfixe CP et éventuellement le suffixe CS sont utilisés. Dans ce cadre, si N = M, l'émetteur implémente un signal mono-porteuse (Single Carrier - SC).

L'émetteur comporte également une chaine analogique RF 16 pour la mise en forme du signal en vue de sa transmission par voie radio. Cette chaine 16 introduit des déséquilibres entre la voie en phase I et la voie en quadrature Q ce qui entraine à la sortie du bloc 16 un signal qui est non-circulaire. Si les déséquilibres I, Q sont connus à la réception, alors l'invention peut s'appliquer aussi à ce type de signaux même si la modulation utilisée n'a pas la propriété de non-circularité.

Par la suite, on décrit en détail le procédé d'égalisation selon les différentes variantes de l'invention. Les figures annexées décrivent la structure fonctionnelle d'un dispositif récepteur configuré pour mettre en oeuvre le procédé d'égalisation selon l'invention. Ces figures schématisent indifféremment les modules que comporte un dispositif récepteur selon l'invention et les étapes de mise en oeuvre du procédé selon l'invention étant entendu que chaque module est configuré pour exécuter une étape correspondante du procédé selon l'invention.

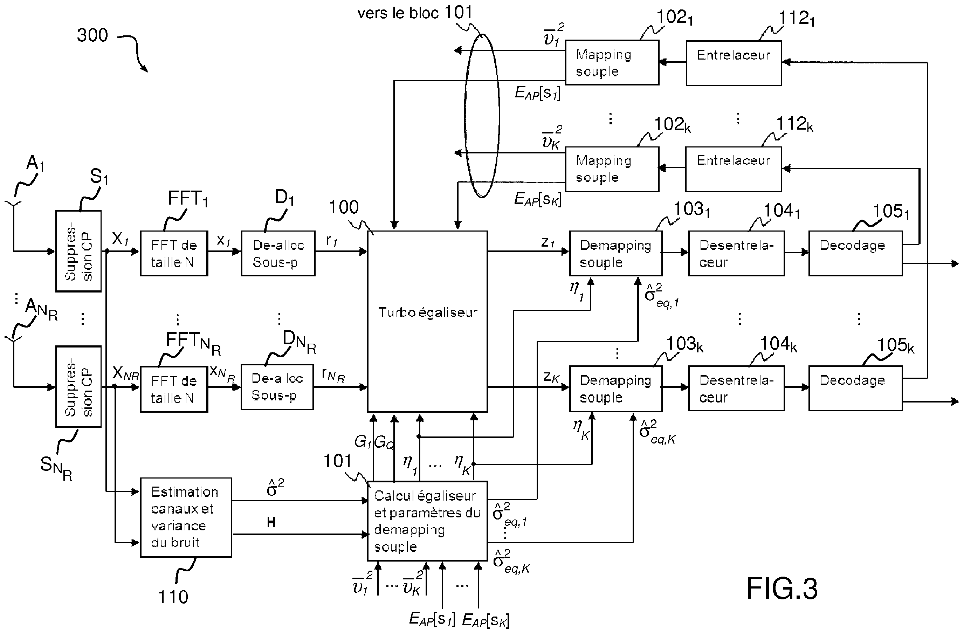

La figure 3 décrit la structure fonctionnelle globale d'un récepteur linéaire au sens large selon l'invention.

Un tel récepteur 300 implémente un algorithme d'effacement d'interférence (Interference Cancellation - IC) itératif dont la finalité est de supprimer autant que possible l'Interférence Inter-Symbole également désignée par interférence ISI et l'interférence multi-utilisateurs (Multi-User Interference - MUI) également désignée par interférence MUI. Quand les antennes d'émission sont localisées dans le même équipement l'interférence multi-utilisateurs MUI est appelée plutôt interférence inter-antenne. De plus l'algorithme implémenté dans les itérations un filtrage linéaire au sens large, qui permet de discriminer les signaux reçus de deux émetteurs même avec une unique antenne.

Dans le système considéré ici, l'interférence inter-symbole est générée quand les symboles du signal de l'utilisateur d'intérêt passent à travers un canal multi-trajet (sélectif en fréquence). L'interférence MUI est générée par les signaux des autres utilisateurs qui sont émis dans les mêmes ressources temps-fréquence et sont superposés au signal de l'utilisateur d'intérêt d'une manière non-orthogonale. Cela est dû au fait que, bien que les signaux des utilisateurs soient émis par des antennes différentes, en général il n'y a pas de séparation spatiale parfaite, sauf cas très particuliers.

La figure 3 représente un schéma-bloc avec la vue fonctionnelle du récepteur 300 dans le cas où les signaux émis sont obtenus avec une technique dite SC-FDMA avec insertion de préfixe CP. On suppose ici que les signaux des émetteurs sont synchronisés au récepteur avec une précision inférieure à la durée du préfixe CP et qu'un algorithme de synchronisation a fourni l'instant de synchronisation au récepteur.

Les signaux sont reçus par les différentes antennes $A_1,...A_{NR}$ du récepteur et sont formatés en blocs de données. Sur chaque voie de réception, des blocs de données sont extraits puis une étape $S_1,...S_{NR}$ de suppression du préfixe CP est exécutée. Les blocs de données en provenance des antennes du récepteur passent ensuite par une étape de transformation de Fourier rapide $FFT_1,... FFT_{NR}$, (Fast Fourier Transform - FFT) de taille N afin de convertir les signaux du domaine temporel vers le domaine fréquentiel. Ensuite les blocs d'échantillons en sortie des FFTs passent dans des blocs $D_1,...D_{NR}$ qui opèrent une sélection des entrées correspondant aux sous-porteuses réellement occupées par le signal utile. Les utilisateurs utilisent les mêmes $M$ sous-porteuses, autrement dit, on récupère à ce stade uniquement les signaux utiles alloués aux M sous-porteuses utilisés et on supprime les sous-porteuses non utilisées. En sortie des blocs ou étapes de dé-allocation de sous-porteuses, les données sont groupées en vecteurs $\mathbf{r}_n$, n = 1, ..., $N_R$ de taille $M$.

En parallèle, les séquences pilotes sont extraites des signaux en provenance des antennes de réception et envoyées dans le bloc 110 qui réalise une estimation de la réponse des canaux et de la variance du bruit. Cette étape 110 est utilisée pour obtenir une estimée de la réponse fréquentielle des canaux entre chaque émetteur et chaque antenne de réception, sur les M sous-porteuses d'intérêt (celles utilisées par les utilisateurs pour envoyer l'information).

Ces réponses fréquentielles sont organisées par simplicité d'exposition dans une matrice $\mathbf{H} = \left[\mathbf{H}_{ik}\right]_{\substack{i=1...N_R \\ k=1...K}}$ diagonale par bloc de taille $(N_R\,M) \times (K\,M)$, où chaque matrice $\mathbf{H}_{ij}$ est diagonale et contient sur sa diagonale l'estimée de la réponse fréquentielle du canal entre l'utilisateur $k$ et l'antenne de réception $i$. L'étape exécutée par zle bloc 110 fournit aussi une estimation de la variance du bruit thermique sur chaque antenne de réception ou bien la moyenne de toutes ces variances. Dans la suite on utilise la deuxième hypothèse.

L'estimée du canal MIMO $\mathbf{H}$ et de la variance du bruit est ensuite passée au bloc 101 qui réalise une étape de calcul de l'égaliseur et des paramètres liés au demapping souple. Ce bloc prend aussi en entrée les quantités $E_{AP}[\mathbf{s}_k]$, k = 1,... K, qui sont des vecteurs contenant les estimées souples des symboles envoyés par les émetteurs, et les quantités $\overline{v}_k^2$, k = 1, ..., K, qui sont des mesures de variance des symboles envoyés par les émetteurs, moyennées sur la longueur de bloc M pour chaque émetteur. $E_{AP}[\cdot]$ désigne la moyenne conditionnée sur toutes les informations a priori en provenance des décodeurs et calculées pendant l'itération précédente. Les quantités $E_{AP}[\mathbf{s}_k]$ et $\overline{v}_k^2$ sont fournies au bloc 101 par les modules $102_1,...102_K$ de mapping souple qui seront décrits plus loin.

Le récepteur 300 exécute un traitement itératif.

A la première itération, quand il n'y a pas d'information souple en provenance du décodeur, la quantité $\overline{v}_k^2 = E_s$, où $E_s$ est l'énergie moyenne des symboles des constellations d'origine des utilisateurs, supposée constante pour tous les utilisateurs, et $E_{AP}[\mathbf{s}_k]= \mathbf{0}$, pour tous les k = 1,... K.

Le bloc 101 fournit en sortie à chaque itération les coefficients de l'égaliseur $\mathbf{G}_I$ et $\mathbf{G}_Q$, les paramètres $\eta_k$ pour k = 1, ..., K, qui donnent une mesure de l'amplitude moyenne des signaux utiles après égalisation et les quantités $\hat{\sigma}_{eq,k}^2$, k = 1, ..., K, qui sont des estimations du bruit après égalisation pour chaque utilisateur.

Les vecteurs $\mathbf{r}_n$, n = 1, ..., $N_R$ de taille $M$ sont transmis au module 100 qui réalise l'étape de turbo-égalisation selon l'invention et qui prend en entrée les coefficients de l'égaliseur $\mathbf{G}_I$ et $\mathbf{G}_Q$, les paramètres $\eta_k$ pour k = 1, ..., K, et les vecteurs avec les estimées souples des symboles émis $E_{AP}[\mathbf{s}_k]$, k = 1,... K. Le bloc 100 réalise la suppression d'interférence (IC) pour les interférences ISI et MUI. Il donne en sortie K vecteurs de symboles égalisés $\mathbf{z}_k$, k = 1, ..., K de taille M.

Nous notons que pour le cas général de constellation complexes (non représenté sur la figure 3) on aura deux ensemble de paramètres $\eta_{I,k}$ et $\eta_{Q,k}$ pour $k$ = 1, ..., K, qui correspondent aux amplitudes estimées du signal utile et de son conjugué.

Chaque vecteur $\mathbf{z}_k$ correspondant à un émetteur est ensuite envoyé vers un module $103_1,...103_K$ de demapping souple, qui produit des métriques souples pour chaque bit qui sont liées à la probabilité que le bit soit 0 ou 1. Ce module de demapping souple prend des formes différentes selon la statistique du signal après égalisation : si la constellation de départ est réelle on peut utiliser un demapper pour des statistiques Gaussienne complexes symétriques, autrement un demapper pour des statistiques Gaussiennes avec pseudo-covariance non nulle est plus adapté.

Les métriques souples sont ensuite désentrelacées par un désentrelaceur $104_1,...104_K$ qui est le bloc inverse de l'entrelaceur $12_k$ employé par un émetteur. Ensuite, quand tous les bits d'un paquet de données sont récupérés, les métriques souples sont envoyées à un décodeur $105_1,...105_K$ qui produit des estimés des bits envoyé et des informations extrinsèques EXT qui mesurent la probabilité que les bits soient 0 et 1 mais après décodage du code correcteur d'erreur en supprimant l'influence de l'égaliseur.

Les informations extrinsèques EXT sont ensuite envoyées à l'entrelaceur $112_k$ de l'utilisateur k pour être entrelacées. Les informations extrinsèques EXT entrelacées entrent dans un module $102_k$ de mapping souple qui calcule pour chaque bloc les estimées souples des symboles émis $E_{AP}[\mathbf{s}_k]$, et l'estimée de la variance moyenne des symboles émis $\overline{v}_k^2$.

Les sorties des blocs $112_k$ sont envoyées aux blocs 100 et 101 pour démarrer une nouvelle itération. Les étapes d'égalisation 100 et de décodage $105_1,...105_K$ sont itérées un nombre prédéterminé de fois.

On décrit à présent plus en détail le procédé d'égalisation selon l'invention exécuté par le module 100 de turbo-égalisation du récepteur 300 dans une première variante d'implémentation.

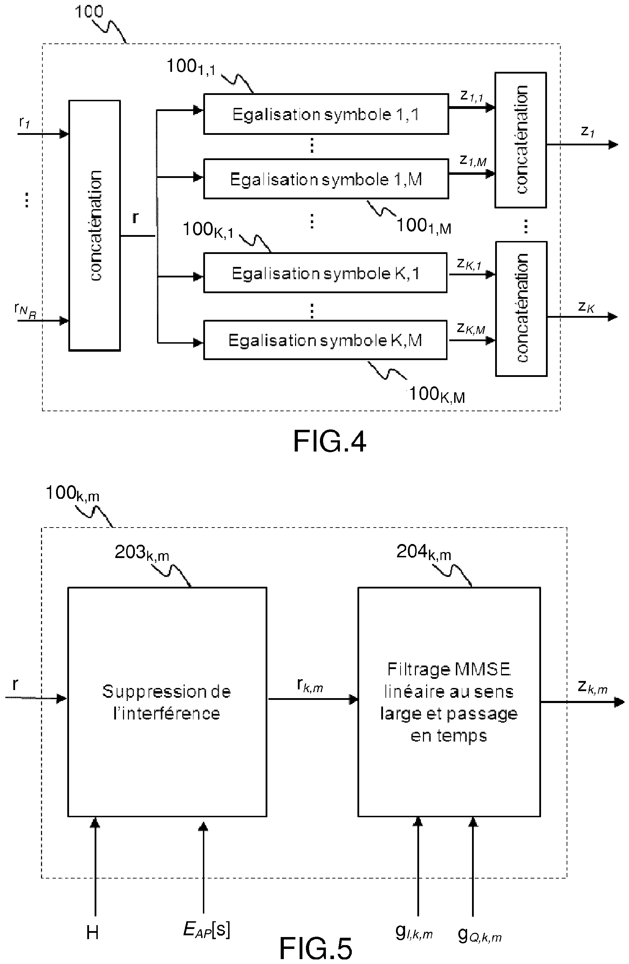

La figure 4 illustre cette première variante d'implémentation du module 100 de turbo-égalisation.

Le module de turbo-égalisation 100 implémente, selon l'invention, le procédé de turbo égalisation linéaire au sens large en fréquence sur les signaux en provenance des $N_R$ antennes du récepteur.

Fonctionnellement le bloc de turbo-égalisation 100 a pour objectif d'effacer l'interférence MUI et l'interférence ISI et d'égaliser les signaux dans le domaine spatio-fréquentiel.

Une première implémentation du bloc 100 consiste à appliquer un égaliseur $100_{1,1}...100_{K,M}$ à chaque symbole de signal reçu sur chacune des M sous-porteuses fréquentielles utiles et des K émetteurs transmettant un signal au récepteur simultanément tel que représenté à la figure 4.

Chaque égaliseur $100_{k,m}$ est composé de deux fonctions principales, une première fonction $203_{k,m}$ de suppression de l'interférence et une seconde fonction $204_{k,m}$ de filtrage linéaire au sens large du signal fréquentiel. Cette décomposition est représentée à la figure 5.

Pour expliquer plus en détail la structure du turbo égaliseur selon l'invention, nous devons introduire des définitions qui nous permettent de traiter l'information souple en sortie des décodeurs.

Soit $E_{AP}[\cdot]$ la moyenne conditionnée sur toutes les informations a priori et $E_{k,m}[\cdot]$ la moyenne conditionnée sur toutes les informations a priori à l'exception de l'information relative au $m^{ième}$ symbole du $k^{ième}$ utilisateur. Cela correspond à l'intuition fondamentale du traitement turbo selon laquelle, dans le traitement d'un symbole donné, il ne faut pas utiliser l'information souple en provenance de l'itération précédente qui concerne ce même symbole.

En conséquence, $E_{k,m}[s_{k,m}]=0$ et $E_{k,m}[|s_{k,m}|^2] = E_s$. Il en suit que $E_{k,m}[\mathbf{s}]= E_{AP}[\mathbf{s}]-E_{AP}[s_{k,m}]\mathbf{e}_{m+(k-1)M} = E_{AP}[\tilde{\mathbf{s}}]$ où le vecteur $\tilde{\mathbf{s}} = \mathbf{s} - s_{k,m}\mathbf{e}_{m+(k-1)M}$ est égal au vecteur $\mathbf{s}$ avec la $(m+(k-1)M)$-eme entrée mise à zéro, et où le vecteur $\mathbf{e}_{m+(k-1)M}$ est un vecteur colonne de taille $KM$ x 1 constitué de zéros à l'exception du coefficient d'indice (m + (k-1)M) qui est égal à 1.

En supposant que l'on cherche à égaliser le $m$-ème symbole du $k$-ème utilisateur, on retranche d'abord une estimée de l'interférence totale reconstruite à partir de l'information souple de tous les symboles excepté le $m$-ème symbole du $k$-ème utilisateur (ce qui formellement est exprimé par l'opérateur $E_{k,m}[\mathbf{s}]$) et on forme ainsi le signal $\mathbf{r}_{k,m}$.

$$\mathbf{r}_{k,m} = \mathbf{r} - \mathbf{H}(\mathbf{I}_K \otimes \mathbf{F}_M) E_{k,m}[\mathbf{s}] = \mathbf{r} - \mathcal{B} E_{k,m}[\mathbf{s}] \qquad (1)$$

Le bloc $203_{k,m}$ de suppression de l'interférence produit en sortie le vecteur $\mathbf{r}_{k,m}$ à partir du vecteur de signal d'entrée $\mathbf{r}$, de la matrice d'estimée du canal $\mathbf{H}$ et des estimées de symboles $E_{AP}[\mathbf{s}]$ fournies par les modules de mapping souple $102_k$.

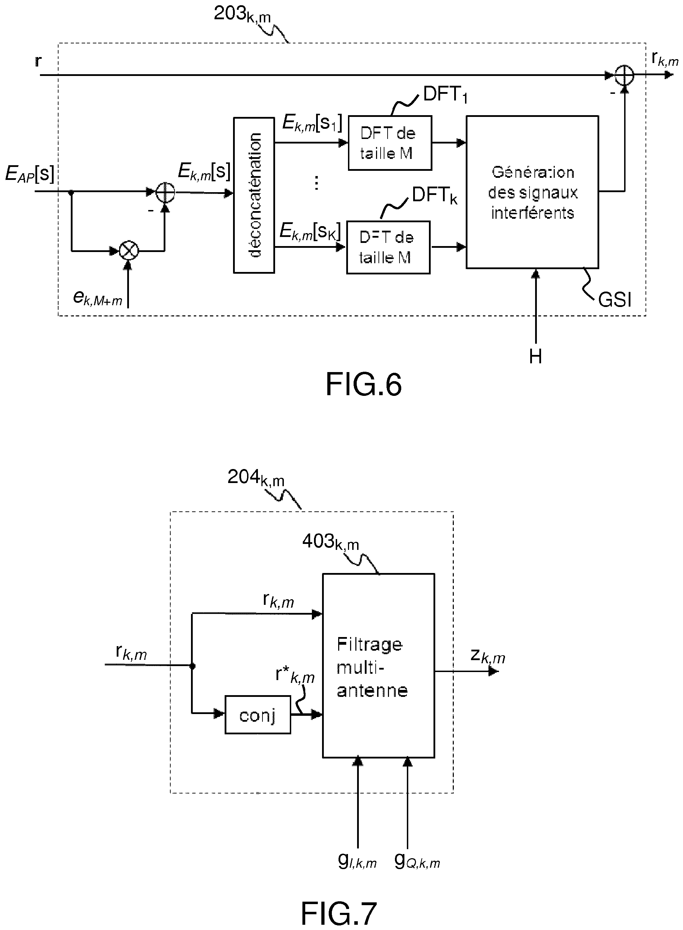

La figure 6 représente plus en détail les fonctions mises en oeuvre par le bloc $203_{k,m}$ de suppression de l'interférence. Ce bloc exécute ni plus ni moins les traitements représentés par l'équation (1). Autrement dit, l'estimée $E_{AP}[\mathbf{s}]$ est multipliée par le vecteur $\mathbf{e}_{m+kM}$ et le résultat de la multiplication est retranché à l'estimée $E_{AP}[\mathbf{s}]$ pour produire le vecteur $E_{k,m}[\mathbf{s}]$ puis une transformée de Fourier inverse $DFT_1, ... DFT_K$ est appliquée à chaque portion du vecteur $E_{k,m}[\mathbf{s}]$ correspondant à un utilisateur. Enfin une étape GSI de génération des signaux interférents exécute la multiplication des sorties des DFT par la matrice d'estimée de canal $\mathbf{H}$. Le signal interférent obtenu est enfin soustrait au signal reçu $\mathbf{r}$.

Le signal représenté par le vecteur $\mathbf{r}_{k,m}$ correspond au signal reçu dont on a retiré l'interférence générée par tous les symboles sauf le m-ème symbole du k-ème utilisateur. Il est ensuite filtré via une étape $204_{k,m}$ de filtrage linéaire au sens large.

Cette étape de filtrage est décrite à la figure 7.

Le vecteur $\mathbf{r}_{k,m}$ et son conjugué $\mathbf{r}^*_{k,m}$ sont filtrés séparément par un filtre multi-antenne $403_{k,m}$ linéaire au sens large à partir de deux filtres égaliseurs $\mathbf{g}_{I,k,m}$ et $\mathbf{g}_{Q,k,m}$. Soit :

$$\hat{\mathbf{r}}_{k,m} = \begin{bmatrix} \mathbf{r}_{k,m} \\ \mathbf{r}^*_{k,m} \end{bmatrix} \quad (2)$$

le vecteur global contenant la concaténation du signal reçu après suppression de l'estimée de l'interférence avec son conjugué :

La sortie de l'étape de filtrage $403_{k,m}$ est donnée par l'expression suivante

$$z_{k,m} = \mathbf{g}^H_{WL,k,m} \hat{\mathbf{r}}_{k,m} = \mathbf{g}^H_{I,k,m} \mathbf{r}_{k,m} + \mathbf{g}^H_{Q,k,m} \mathbf{r}^*_{k,m} \qquad (3)$$

$\mathbf{g}_{WL,k,m}$ est un vecteur de taille $2N_R M$ qui représente le filtre linéaire au sens large et qui peut être aussi décrit d'une façon équivalente par les deux filtres $\mathbf{g}_{I,k,m}$ et $\mathbf{g}_{Q,k,m}$ de taille $N_R M$ chacun. Le filtre linéaire au sens large $\mathbf{g}_{WL,k,m}$ traite donc conjointement le signal et son conjugué. Notons aussi que ce filtre contient une opération de transformée de Fourier inverse. Les symboles égalisés obtenus en sortie de ce filtre sont donc délivrés dans le domaine temporel.

Il existe deux façons équivalentes d'exprimer le signal après suppression de l'interférence $\mathbf{r}_{k,m}$, qui donnent deux interprétations pratiques. La première formulation est

$$\begin{aligned} \mathbf{r}_{k,m} &= \mathbf{H}(\mathbf{I}_K \otimes \mathbf{F}_M)(\tilde{\mathbf{s}} - E_{AP}[\tilde{\mathbf{s}}]) + \mathbf{H}(\mathbf{I}_K \otimes \mathbf{F}_M)\mathbf{e}_{m+(k-1)M} s_{k,m} + \mathbf{w} \\ &= \mathcal{B}(\tilde{\mathbf{s}} - E_{AP}[\tilde{\mathbf{s}}]) + s_{k,m} \mathbf{b}_{k,m} + \mathbf{w} \end{aligned} \qquad (4)$$

Puisque $E_{k,m}[\mathbf{s}] = E_{AP}[\mathbf{s}] - E_{AP}[s_{k,m}]\mathbf{e}_{m+(k-1)M} = E_{AP}[\tilde{\mathbf{s}}]$ comme décrit plus haut, $\mathbf{H}(\mathbf{I}_K \otimes \mathbf{F}_M) E_{AP}[\tilde{\mathbf{s}}]$ est l'interférence reconstruite (ISI et MUI) qui est retranchée du signal, et $\mathbf{H}(\mathbf{I}_K \otimes \mathbf{F}_M)\mathbf{e}_{m+(k-1)M} s_{k,m}$ est le signal utile (le symbole utile) mis en évidence dans l'expression.

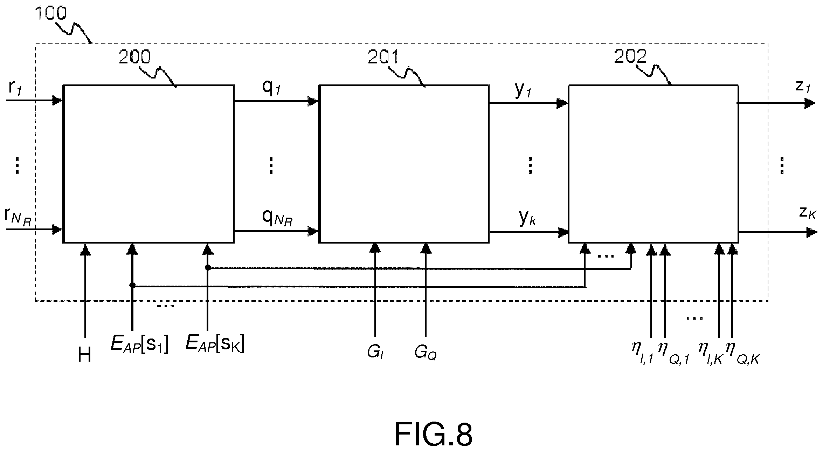

Cette expression donne la structure du bloc 100 représenté dans la figure 8. En particulier, pour chaque symbole à décoder de chaque utilisateur, à partir de l'information souple en provenance des décodeurs, le turbo égaliseur selon l'invention reconstruit le signal interférent qui est donné par la somme des signaux des autres utilisateurs (interférence MUI) et de l'interférence ISI reconstruite à partir des symboles de l'utilisateur d'intérêt moins le symbole que l'on souhaite décoder. Ce signal interférent global reconstruit est ensuite retranché du signal total. Puis, le signal purifié de l'interférence est passé par un égaliseur fréquentiel qui améliore encore la séparation entre utilisateurs et égalise l'interférence ISI résiduelle.

La mise en oeuvre d'un filtrage linéaire au sens large, c'est-à-dire un filtrage qui traite le signal et son conjugué séparément via deux filtres égaliseurs permet d'améliorer sensiblement les performances d'égalisation par rapport à un filtre égaliseur usuel.

Les figures 4 à 7 illustrent le principe général de l'égaliseur selon l'invention selon une première implémentation pour laquelle un filtre égaliseur est appliqué à chaque symbole provenant de chaque utilisateur.

Le schéma de principe de la figure 4 présente cependant l'inconvénient d'une complexité de mise en oeuvre importante.

On décrit à présent une seconde implémentation du procédé d'égalisation selon l'invention dans laquelle les traitements, bien que fonctionnellement équivalents à ceux présentés pour la première implémentation ci-dessus, présentent une complexité d'implémentation diminuée.

La relation (4) peut être réécrite selon la seconde formulation équivalente suivante.

$$\mathcal{B} = \mathbf{H}(\mathbf{I}_K \otimes \mathbf{F}_M)$$
$$\mathcal{b}_{k,m} = \mathbf{H}(\mathbf{I}_K \otimes \mathbf{F}_M)\mathbf{e}_{m+(k-1)M}$$

La relation (5) montre que le signal $\mathbf{r}_{k,m}$ peut être obtenu à partir d'une estimation du symbole utile transmis à travers le canal de propagation $\mathbf{H}(\mathbf{I}_K\otimes\mathbf{F}_M)\mathbf{e}_{m+(k-1)M}E_{AP}[s_{k,m}]$ et corrigé par le terme correctif $\mathbf{q}=\mathbf{r}-\mathbf{H}(\mathbf{I}_K\otimes\mathbf{F}_M)E_{AP}[\boldsymbol{s}]$ où la quantité $\mathbf{H}(\mathbf{I}_K\otimes\mathbf{F}_M)E_{AP}[\boldsymbol{s}]$ est une estimée du signal global reconstruit à partir des informations souples en provenance des décodeurs à l'itération précédente.

Après filtrage on peut exprimer la sortie du filtre égaliseur comme la somme de l'estimation du signal utile pondérée par le coefficient

$$\mathbf{g}_{I,k,m}^{H}\mathcal{b}_{k,m}$$

et de son conjugué pondérée par le coefficient

$$\mathbf{g}_{Q,k,m}^{H}\mathcal{b}_{k,m}^{*}$$

et le signal correctif filtré par l'égaliseur :

$$z_{k,m} = \mathbf{g}_{WL,k,m}^{H}\hat{\mathbf{r}}_{k,m} = \mathbf{g}_{WL,k,m}^{H}\begin{bmatrix}(\mathbf{r}-\mathcal{B}E_{AP}[\boldsymbol{s}])\\(\mathbf{r}-\mathcal{B}E_{AP}[\boldsymbol{s}])^{*}\end{bmatrix} + \mathbf{g}_{WL,k,m}^{H}\begin{bmatrix}\mathcal{b}_{k,m}E_{AP}[s_{k,m}]\\\mathcal{b}_{k,m}^{*}E_{AP}[s_{k,m}^{*}]\end{bmatrix} \tag{6}$$
$$= \mathbf{g}_{WL,k,m}^{H}\begin{bmatrix}\mathbf{q}\\\mathbf{q}^{*}\end{bmatrix} + \mathbf{g}_{I,k,m}^{H}\mathcal{b}_{k,m}E_{AP}[s_{k,m}] + \mathbf{g}_{Q,k,m}^{H}\mathcal{b}_{k,m}^{*}(E_{AP}[s_{k,m}])^{*}$$

Cette interprétation conduit à l'implémentation du turbo égaliseur proposée à la figure 8 qui est composée de trois étapes 200, 201, 202.

Selon cette seconde implémentation, au lieu de retrancher l'interférence MUI et l'interférence ISI de chaque symbole utile de chaque utilisateur, le bloc 200 vise à retrancher une estimée du signal global (interférence plus utile) d'une façon à obtenir un signal correctif. Ce signal correctif est ensuite filtré par le bloc de filtrage linéaire au sens large 201 pour augmenter la séparation entre utilisateurs et réduire d'avantage l'interférence ISI. Le signal correctif filtré est ensuite combiné 202 avec l'estimation du signal utile obtenue à partir de l'information souple en sortie des décodeurs à l'itération précédente, de manière à améliorer progressivement (itération après itération) l'estimation du signal utile final.

Le schéma de la figure 8 est fonctionnellement équivalent à la méthode décrite à la figure 4 mais permet une réduction de complexité grâce au fait que la reconstruction du signal reçu dans le bloc 200 peut être faite en travaillant par bloc avec une transformée de Fourier rapide. Cela est possible lorsqu'on vise à reconstruire le signal reçu dans son intégralité, autrement dit le signal utile et le signal interférent mais n'est plus possible lorsqu'on vise à reconstruire le signal interférent seul comme cela est le cas dans la première variante d'implémentation décrite aux figures 4 à 7.

Selon la seconde implémentation, l'égaliseur 100 selon l'invention comprend un premier bloc 200 de génération de $N_R$ signaux correctifs $\mathbf{q}_1,.. \mathbf{q}_{NR}$, un deuxième bloc 201 de filtrage linéaire au sens large 201 des signaux correctifs afin de produire un ensemble de K signaux correctifs filtrés $\mathbf{y}_1,.. \mathbf{y}_K$ et un troisième bloc 202 de combinaison des signaux correctifs filtrés avec une estimée du signal utile afin de produire un ensemble de K signaux égalisés $\boldsymbol{z}_1,.. \boldsymbol{z}_K$.

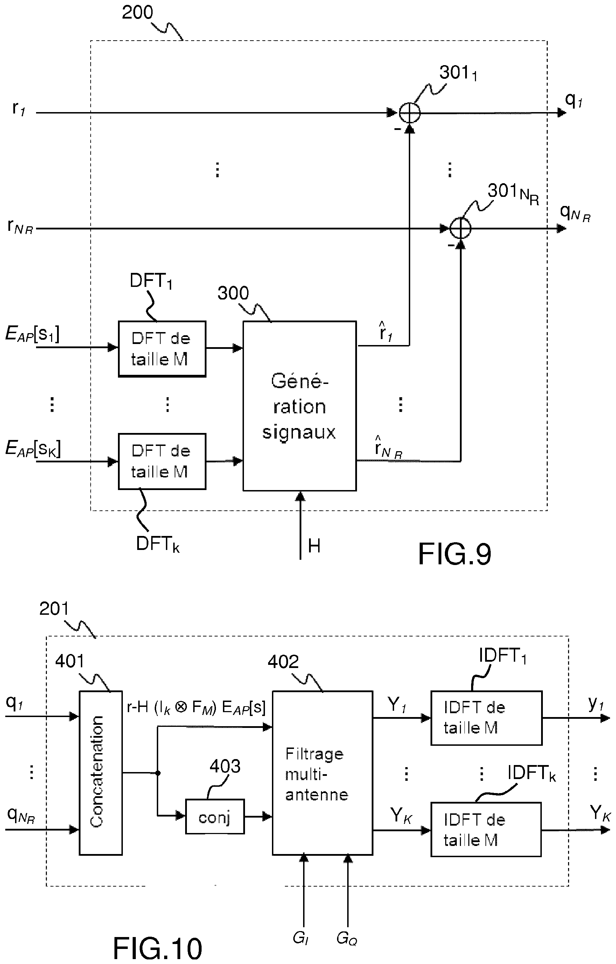

Le premier bloc 200 soustrait du signal reçu le signal reconstruit à partir des informations en sortie du module de mapping souple. Ce premier bloc 200 est décrit à la figure 9.

Il converti dans le domaine fréquentiel chaque vecteur de taille $M$ contenant les estimées souples des symboles émis $E_{AP}[\mathbf{s}_k]$, $k = 1,... K,$ au travers d'une transformée de Fourier directe $DFT_1,...DFT_K$, de taille $M$. Un module 300 exécute ensuite les opérations suivantes. Les vecteurs en sortie des transformées de Fourier directes sont concaténés ensemble, le vecteur concaténé est ensuite multiplié par la matrice $\mathbf{H}$ d'estimation de canal et le vecteur de sortie de taille $N_R M$ est segmenté en $N_R$ vecteurs de taille $M$.

Les signaux en sortie du module 300 représentent une estimation des signaux reçus à partir des symboles reconstruits à l'aide des sorties des décodeurs. Ils comprennent donc l'interférence MUI et l'interférence ISI, autrement dit toutes les sources d'interférence, ainsi que le signal utile que l'on souhaite décoder. Les opérations $301_1,...301_{NR}$ réalisent une soustraction entrée par entrée entre les signaux reçus $\mathbf{r}_{1,...}\ \mathbf{r}_{NR}$ et les signaux estimés en sortie du module 300.

A la première itération du procédé d'égalisation, l'information souple en provenance du décodeur est initialisée à zéro, et donc le bloc 200 ne modifie pas le signal entrant : $\mathbf{q}_n = \mathbf{r}_n$. A la dernière itération, en supposant que le récepteur itératif ait convergé vers des estimations correctes des symboles émis, le signal reconstruit en sortie du module 300 correspond aux signaux transmis à travers les filtres des canaux de propagation. Donc les vecteurs $\mathbf{q}_n$ ne représenteront que du bruit. Pendant les itérations intermédiaires, quand les signaux totaux reconstruits à la sortie du module 300 ne sont qu'une approximation plus ou moins bonne des signaux effectivement reçus sans bruit, le bloc 200 produit des signaux correctifs $\mathbf{q}_n$ qui une fois filtrés par le bloc de filtrage 201 et sommés aux estimations souples des signaux utiles par le bloc 202 permettrons aux signaux $\mathbf{z}_k$ d'approcher progressivement les signaux utiles réellement émis (naturellement dans la limite du bruit présent).

Le second bloc de filtrage linéaire au sens large 201 est décrit à la figure 10.

Les $N_R$ signaux correctifs produits en sortie du premier bloc 200 et représentés par des vecteurs de taille M sont concaténés 401 dans un unique vecteur $\mathbf{q}$ qui peut s'écrire sous la forme : $\mathbf{q}=\mathbf{r}-\mathbf{H}(\mathbf{I}_K\otimes\mathbf{F}_M)E_{AP}[\mathbf{s}]$ et qui est de taille égale à $N_R M$. $\mathbf{F}_M$ est la matrice de transformée de Fourier définie en préambule de la présente description.

Le vecteur $\mathbf{q}$ est ensuite conjugué 403 entrée par entrée pour obtenir le vecteur $\mathbf{q}^*$. Les vecteurs $\mathbf{q}$ et $\mathbf{q}^*$ sont transmis au bloc de filtrage multi-antenne 402 qui effectue l'opération suivante :

$$\mathbf{Y} = G_I^H\mathbf{q} + G_Q^H\mathbf{q}^* = \begin{bmatrix} G_I^H & G_Q^H \end{bmatrix}\begin{bmatrix} \mathbf{q} \\ \mathbf{q}^* \end{bmatrix} = G_{WL}^H\hat{\mathbf{q}}; \qquad G_{WL} = \begin{bmatrix} G_I \\ G_Q \end{bmatrix}, \quad \hat{\mathbf{q}} = \begin{bmatrix} \mathbf{q} \\ \mathbf{q}^* \end{bmatrix}$$

Le filtrage opéré est un filtrage linéaire au sens large, c'est-à-dire que le vecteur q et son conjugué q* sont filtrés séparément.

Le vecteur $\mathbf{Y},$ de taille égale à $MK,$ est ensuite segmenté en $K$ vecteurs $\mathbf{Y}_k$ de tailles égales à $M.$ L'opération matricielle peut être faite efficacement parce que les matrices ont chacune seulement $N_R MK$ entrées différentes de zéro. Le nombre K d'utilisateurs est supposé connu ou une hypothèse est prise sur ce nombre.

Enfin, les vecteurs filtrés sont convertis dans le domaine temporel par le biais de K modules de transformée de Fourier inverse $IDFT_1,...IDFT_K$.

La structure de la figure 10 est une structure générique qui peut s'appliquer à tout type de constellation (réelle, quasi-rectiligne, complexe).

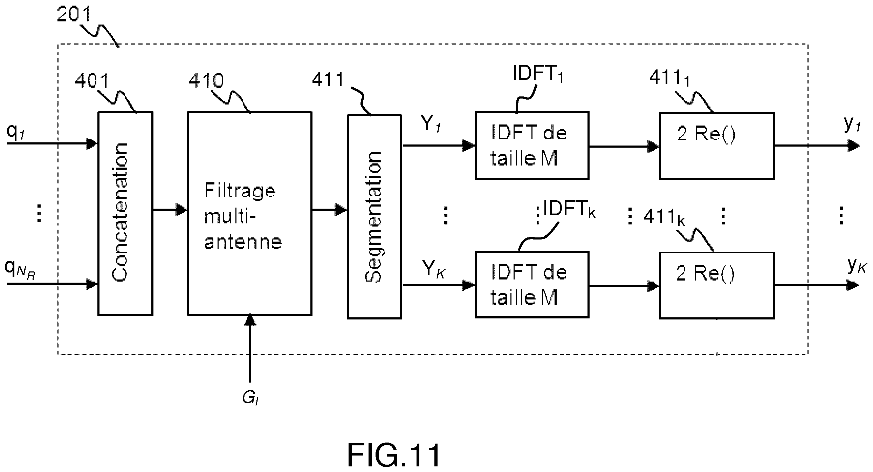

La figure 11 décrit une variante d'implémentation du module de filtrage linéaire au sens large 201 dans le cas où le signal émis est modulé avec une constellation réelle. Dans ce cas uniquement, la structure de la figure 10 peut être optimisée pour réaliser la même fonction mais avec un nombre restreint d'opérations.

En effet, pour des constellations réelles il est possible de montrer que le filtre $G_I$ qui est destiné à filtrer le signal correctif q et le filtre $G_Q$ qui est destiné à filtrer le signal correctif q* sont liés par la relation suivante :

$$G_Q = G_I^*(\mathbf{I}_M \otimes \mathbf{J})$$

La matrice J est définie comme suit :

$$\mathbf{J} = \mathbf{F}_M\mathbf{F}_M^T = \begin{bmatrix} 1 & 0 & \cdots & 0 \\ 0 & \ddots & \ddots & 1 \\ \vdots & \ddots & \ddots & 0 \\ 0 & 1 & 0 & 0 \end{bmatrix}$$

Nous remarquons que les identités suivantes sont vraies: $\mathbf{J} = \mathbf{J}^T = \mathbf{J}^H = \mathbf{J}^* = \mathbf{J}^{-1}$. Cette matrice $\mathbf{J}$ représente l'inversion de l'axe fréquentiel d'un signal discret et périodique ; on peut l'apprécier en appliquant un vecteur en entrée et en regardant la sortie. La multiplication par cette matrice peut être implémentée par des permutations.

En appelant $\mathbf{q}$ le vecteur obtenu par concaténation de tous les vecteurs $\mathbf{q}_n$, $n = 1, ..., N_R$, et $\mathbf{y}$ le vecteur obtenu par concaténation des vecteurs $\mathbf{y}_k$, $k = 1, ..., K$, en utilisant la propriété précédente le vecteur de symboles égalisés peut s'écrire ainsi

$$\mathbf{Y} = G_l^H \mathbf{q} + (\mathbf{I}_M \otimes \mathbf{J})\left(G_l^H\right)^* (\mathbf{I}_M \otimes \mathbf{J})(\mathbf{I}_M \otimes \mathbf{J})\mathbf{q}^*$$

L'expression ci-dessus peut être interprétée comme un filtrage suivi d'une opération d'extraction de la partie réelle. En effet, le filtre représenté par la matrice diagonale par bloc $G_l$ dans le domaine fréquentiel possède une réponse impulsionnelle dans le domaine temporel qui peut être exprimée par une matrice circulante par bloc

$$G_{l,t} = (\mathbf{I}_K \otimes \mathbf{F}_M^H)G_l(\mathbf{I}_K \otimes \mathbf{F}_M) .$$

La réponse fréquentielle du filtre conjugué $G_{l,t}^*$ est

$$(\mathbf{I}_M \otimes \mathbf{J})\left(G_l^H\right)^*(\mathbf{I}_M \otimes \mathbf{J}) .$$

De plus, si $\mathbf{q}_t = (\mathbf{I}_K \otimes \mathbf{F}_M^H)\mathbf{q}$ est le signal réel dans le domaine temporel, alors en fréquence l'identité suivante est vérifiée

$$(\mathbf{I}_K \otimes \mathbf{F}_M)\mathbf{q}_t^* = (\mathbf{I}_M \otimes \mathbf{J})\mathbf{q}^* .$$

Cela complète la preuve.

Le module de filtrage 201 comprend donc, selon la seconde implémentation applicable aux constellations réelles et décrite à la figure 11, un premier module 401 de concaténation des vecteurs d'entrée pour obtenir le vecteur unique $\mathbf{q}$, un module de filtrage 410 du signal correctif $\mathbf{q}$ à partir du filtre égaliseur $G_l$, un module 411 de segmentation du signal correctif filtré en K vecteurs $\mathbf{y}_k$, $k = 1, ..., K$ qui sont ensuite chacun convertis dans le domaine temporel via une transformée de Fourier inverse $IDFT_k$. Enfin un dernier module $411_k$ réalise une extraction de la partie réelle de chaque entrée de chaque vecteur et une multiplication par 2 pour fournir les signaux correctifs égalisés.

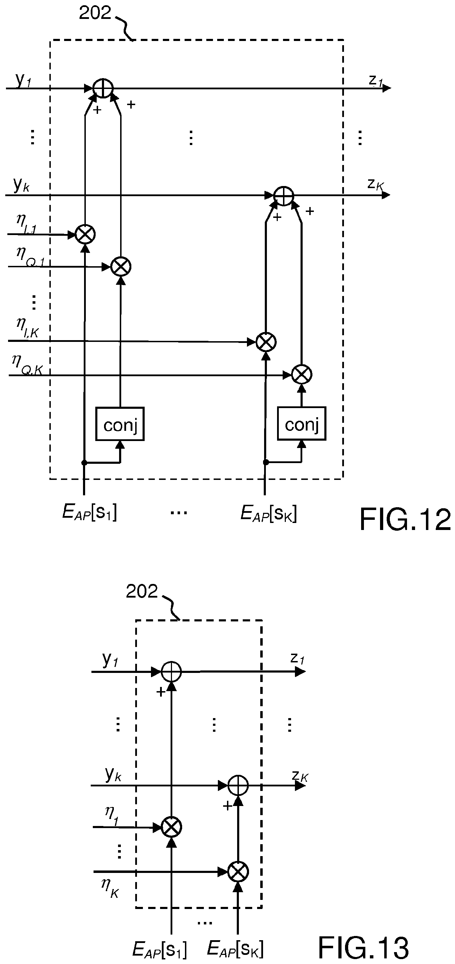

La figure 12 décrit le troisième bloc 202 de combinaison des signaux correctifs filtrés avec une estimée du signal utile.

Le bloc 202 ajoute à chaque sortie du bloc de filtrage 201, une estimée des signaux utiles, pondérée par les facteurs $\eta_{l,k}$ et $\eta_{Q,k}$ pour $k = 1, ..., K$, qui représentent l'amplitude de la composante utile du signal et du signal conjugué de chaque utilisateur après égalisation. Le bloc 202 a donc pour fonction de rajouter aux signaux correctifs filtrés en sortie du bloc de filtrage 201 les estimées des signaux utiles obtenues à partir de l'information souple des décodeurs, calculées à l'itération précédente et pondérées par les estimées des amplitudes $\eta_{l,k}$ et $\eta_{Q,k}$.

A la première itération, l'information souple en provenance des décodeurs est nulle. Le bloc 202 n'a donc pas d'effet à la première itération du procédé tout comme le bloc 200 et la sortie du bloc de filtrage 201 constitue l'estimée des signaux utiles utilisée.

A la dernière itération, en supposant que le récepteur itératif ait convergé vers des estimations correctes des symboles émis, le bloc 202 ajoute un terme de bruit en provenance du filtrage 201. Dans les itérations intermédiaires la fonction du bloc 202 est d'améliorer l'estimation du signal utile grâce au signal correctif en sortie de filtrage 201.

Dans le cas où le signal émis est modulé avec une constellation réelle, le bloc 202 de combinaison avec les estimées des signaux utiles prend une forme simplifiée tel que décrit à la figure 13.

Puisque le signal reconstruit est réel, les amplitudes $\eta_{l,k}$ et $\eta_{Q,k}$ peuvent se résumer dans un unique facteur $\eta_k$ pour $k = 1, ..., K$, qui représente l'amplitude de la composante utile du signal de chaque utilisateur après égalisation. Un seul coefficient est donc suffisant. La description logique et fonctionnelle du bloc 202 est la même que pour le cas général de constellations complexes.

On détaille à présent les étapes nécessaires au calcul du ou des filtres égaliseurs qui sont utilisés par l'étape de filtrage multi-antenne 402,410 du bloc de filtrage linéaire au sens large 201 de l'égaliseur selon l'invention.

On décrit dans un premier temps le calcul des filtres égaliseurs dans le cas général d'un signal modulé avec une constellation complexe. Puis on distingue successivement le cas de constellations réelles du type M-PAM ou BPSK d'une part et de constellations réelles du type M-PAM ou BPSK tournés encore appelées π/2-M-PAM ou π/2-BPSK.

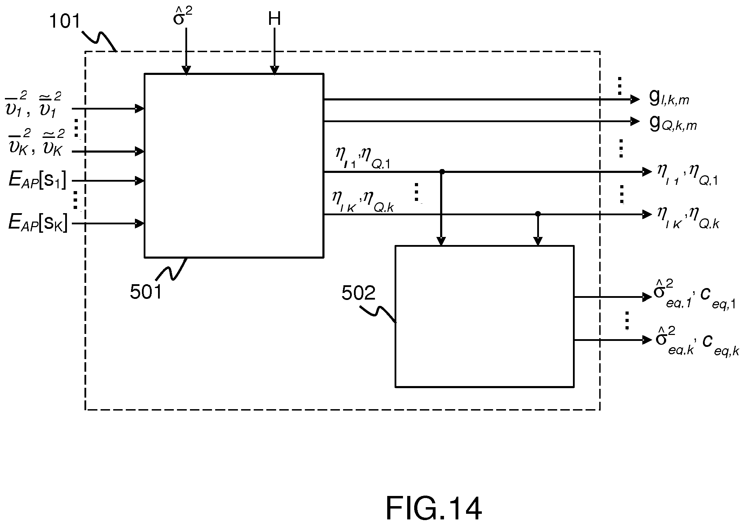

La figure 14 décrit le module 101 de calcul des coefficients de l'égaliseur selon une première variante de réalisation applicable aux constellations complexes.

Ce module 101 comprend un premier bloc 501 de calcul de l'égaliseur dans le domaine fréquentiel et de calcul d'une estimée de l'amplitude des symboles utiles.

Le module 101 comprend également un second bloc 502 de calcul de la variance de bruit après égalisation. Plus précisément le bloc 502 détermine les covariances et pseudo-covariances du signal après égalisation. Sa réalisation n'est pas développée ici car elle concerne des principes de calcul connus de l'homme de l'art.

Le premier bloc 501 calcule un égaliseur selon le critère de minimisation de l'erreur quadratique moyen dit critère MMSE. Au contraire d'un égaliseur à forçage à zéro, ou zero forcing equalizer en anglais, dont le but est d'annuler parfaitement l'interférence, le but de cet égaliseur MMSE est de réduire les interférences MUI et ISI si possible jusqu'au niveau du bruit. Pour réaliser cela, cet égaliseur utilise les degrés de liberté qu'il a au niveau de sa réponse fréquentielle pour limiter l'interférence ISI de chaque utilisateur. Il utilise également les degrés de liberté spatiaux, donnés par le nombre d'antennes en réception, pour limiter l'interférence MUI et les degrés de liberté liés aux propriétés statistiques des signaux non-circulaires, pour limiter d'avantage l'interférence MUI.

Dans la suite nous décrivons la technique jusqu'à mettre en lumière l'endroit où on utilise une approche linéaire au sens large multi-utilisateur, avec antennes multiples qui est l'un des points innovants de la présente invention.

Définissons le vecteur global $\hat{\mathbf{r}}_{k,m}$ qui contient la concaténation du signal reçu $\mathbf{r}_{k,m}$ après suppression de l'estimée de l'interférence avec son conjugué. Le filtre MMSE qui reçoit en entrée tous les échantillons du signal reçu global après suppression de l'estimée de l'interférence $\hat{\mathbf{r}}_{k,m}$ et donne en sortie le $m$-ième symbole du $k$-ième utilisateur après égalisation s'écrit dans notre cas selon la formule générale d'un égaliseur MMSE.

$$\mathbf{g}_{WL,k,m} = \begin{bmatrix} \mathbf{g}_{I,k,m} \\ \mathbf{g}_{Q,k,m} \end{bmatrix} = \mathbf{C}_{\hat{\mathbf{r}}_{k,m}}^{-1} \mathbf{C}_{\hat{\mathbf{r}}_{k,m} s_{k,m}} \qquad (7)$$

où $\mathbf{C}_{\hat{\mathbf{r}}k,m}$ est la matrice de covariance de $\hat{\mathbf{r}}_{k,m}$ et $\mathbf{C}_{\hat{\mathbf{r}}_{k,m} s_{k,m}}$ est le vecteur de cross-covariance ou covariance croisée de $\hat{\mathbf{r}}_{k,m}$ et du $m$-ième symbole du $k$-ième utilisateur $s_{k,m}$.

Nous notons que

$$\mathbf{C}_{\hat{\mathbf{r}}_{k,m}} = E\left[\left(\hat{\mathbf{r}}_{k,m} - E_{AP}[\hat{\mathbf{r}}_{k,m}]\right)\left(\hat{\mathbf{r}}_{k,m} - E_{AP}[\hat{\mathbf{r}}_{k,m}]\right)^H\right] = E\left[\hat{\mathbf{r}}_{k,m} \hat{\mathbf{r}}_{k,m}^H\right] = \begin{bmatrix} \mathbf{C}_{\mathbf{r}_{k,m}} & \tilde{\mathbf{C}}_{\mathbf{r}_{k,m}} \\ \tilde{\mathbf{C}}_{\mathbf{r}_{k,m}}^* & \mathbf{C}_{\mathbf{r}_{k,m}}^* \end{bmatrix} \qquad (8)$$

Et

$$\mathbf{C}_{\hat{\mathbf{r}}_{k,m} s_{k,m}} = \begin{bmatrix} \mathbf{C}_{\mathbf{r}_{k,m} s_{k,m}} \\ \tilde{\mathbf{C}}_{\mathbf{r}_{k,m} s_{k,m}}^* \end{bmatrix} \qquad (9)$$

Les expressions précédentes montrent que naturellement la covariance et la covariance croisée calculées sur le signal global $\hat{\mathbf{r}}_{k,m}$ font apparaitre la covariance et la pseudo-covariance du signal reçu après suppression d'interférence $\mathbf{r}_{k,m}$ ainsi que la covariance croisée et pseudo-covariance croisée du signal $\mathbf{r}_{k,m}$ avec le symbole $s_{k,m}$ que l'on cherche à égaliser.

En partant de l'expression (5) de $\mathbf{r}_{k,m}$ il est possible de montrer que la matrice de covariance de $\mathbf{r}_{k,m}$ a la forme suivante

$$\begin{aligned} \mathbf{C}_{\mathbf{r}_{k,m}} &= E_{k,m}\left[\mathbf{r}_{k,m} \mathbf{r}_{k,m}^H\right] \\ &= \left(E_s - \overline{v}_k^2\right)\boldsymbol{b}_{k,m} \boldsymbol{b}_{k,m}^H + \boldsymbol{\mathcal{B}}\left(diag\left(\overline{v}_0^2, ..., \overline{v}_{K-1}^2\right) \otimes \mathbf{I}_M\right)\boldsymbol{\mathcal{B}}^H + \hat{\sigma}\, \mathbf{I}_{N_R M} \\ &= \left(E_s - \overline{v}_k^2\right)\boldsymbol{b}_{k,m} \boldsymbol{b}_{k,m}^H + \boldsymbol{\Sigma}_{1,1} \end{aligned} \qquad (10)$$

Et que la matrice de pseudo-covariance de $\mathbf{r}_{k,m}$ a la forme suivante

$$\tilde{\mathbf{C}}_{\mathbf{r}_{k,m}} = E_{k,m}\left[\mathbf{r}_{k,m}\mathbf{r}_{k,m}^T\right]$$
$$= \left(\tilde{E}_s - \tilde{\overline{v}}_k^2\right)\mathbf{b}_{k,m}\mathbf{b}_{k,m}^T + \mathbf{\mathcal{B}}\left(diag\left(\tilde{\overline{v}}_0^2,\ldots,\tilde{\overline{v}}_{K-1}^2\right)\otimes \mathbf{I}_M\right)\mathbf{\mathcal{B}}^T \qquad (11)$$
$$= \left(\tilde{E}_s - \tilde{\overline{v}}_k^2\right)\mathbf{b}_{k,m}\mathbf{b}_{k,m}^T + \mathbf{\Sigma}_{1,2}$$

où les estimées de covariance et pseudo-covariance à partir de l'information souple fourni par les décodeurs sont calculées ainsi :

$$\overline{v}_k^2 = \frac{1}{M}\sum_{m=1}^M v_{k,m}^2, \quad k=1,\ldots,K$$

$$\tilde{\overline{v}}_k^2 = \frac{1}{M}\sum_{m=1}^M \tilde{v}_{k,m}^2, \quad k=1,\ldots,K$$

Où $v_{k,m}^2 = E_{AP}\left[\left|s_{k,m} - E_{AP}\left[s_{k,m}\right]\right|^2\right]$, $\tilde{v}_{k,m}^2 = E_{AP}\left[\left(s_{k,m} - E_{AP}\left[s_{k,m}\right]\right)^2\right]$ et $E_s = E_{k,m}[|s_{k,m}|^2]$ pour tous les

ket m, et $\tilde{E}_s = E_{k,m}[s_{k,m}^2]$ pour tous les indices k et m. Notons que $E_s$ et $v_{k,m}^2$ sont des nombres réels et que $\tilde{E}_s$ et $\tilde{v}_{k,m}^2$

sont en général des nombre complexes. Pour des constellations réelles $\tilde{E}_s = E_s$, $\tilde{v}_{k,m}^2 = v_{k,m}^2$. $\mathbf{C}_{\mathbf{r}_{k,m}}$ et $\tilde{\mathbf{C}}_{\mathbf{r}_{k,m}}$ sont des matrices de taille $N_R M$ x $N_R M$. La présence d'utilisateurs multiples est indiquée par la matrice $\left(diag\left(\overline{v}_0^2,\ldots,\overline{v}_{K-1}^2\right)\otimes \mathbf{I}_M\right)$ qui est de taille $KM$ x $KM$, et sa correspondante pour la matrice de pseudo-covariance, et par la matrice

$$\mathbf{\mathcal{B}} = \mathbf{H}\left(\mathbf{I}_K \otimes \mathbf{F}_M\right)$$

qui est de taille $N_R M$ x $KM$. Nous notons aussi que les termes $\overline{v}_k^2$ et $\tilde{\overline{v}}_k^2$ décrivent l'influence des informations souples en provenance des décodeurs sur l'expression de l'égaliseur. Notamment ces valeurs donnent l'estimée des variances et des pseudo-variances des symboles émis. A la première itération, $\overline{v}_k^2 = E_s$ et $\tilde{\overline{v}}_k^2 = \tilde{E}_s$ et on obtient le filtre spatio-fréquentiel MMSE linéaire au sens large non itératif (c'est à dire sans la présence d'information provenant du décodeur).

Les matrices de covariance croisée et de pseudo covariance croisée entre $\mathbf{r}_{k,m}$ et le symbole $s_{k,m}$ sont égales à

$$\mathbf{C}_{\mathbf{r}_{k,m}s} = E_{k,m}\left[\mathbf{r}_{k,m}s_{k,m}^*\right] = E_s\,\mathbf{b}_{k,m}$$
$$\tilde{\mathbf{C}}_{\mathbf{r}_{k,m}s} = E_{k,m}\left[\mathbf{r}_{k,m}s_{k,m}\right] = \tilde{E}_s\,\mathbf{b}_{k,m} \qquad (12)$$

Elles sont des vecteurs de taille $N_R M$.

Il convient de noter ici que la matrice de pseudo covariance croisée est calculée en fonction de la pseudo-covariance $\tilde{E}_s$ des symboles émis qui est non nulle pour les modulations ayant une constellation vérifiant la propriété dite de non-circularité tel qu'explicite au début de la présente description.

En reprenant les formules (10), (11), (12), le filtre égaliseur peut s'écrire

$$\mathbf{g}_{WL,k,m} = \left\{\hat{\mathbf{\Sigma}} + \begin{bmatrix} \mathbf{b}_{k,m} & \mathbf{0} \\ \mathbf{0} & \mathbf{b}_{k,m}^* \end{bmatrix}\begin{bmatrix} \left(E_s - \overline{v}_k^2\right) & \left(\tilde{E}_s - \tilde{\overline{v}}_k^2\right) \\ \left(\tilde{E}_s - \tilde{\overline{v}}_k^2\right)^* & \left(E_s - \overline{v}_k^2\right) \end{bmatrix}\begin{bmatrix} \mathbf{b}_{k,m}^H & \mathbf{0} \\ \mathbf{0} & \mathbf{b}_{k,m}^T \end{bmatrix}\right\}^{-1}\begin{bmatrix} \mathbf{b}_{k,m} & \mathbf{0} \\ \mathbf{0} & \mathbf{b}_{k,m}^* \end{bmatrix}\begin{bmatrix} E_s \\ \tilde{E}_s^* \end{bmatrix} \quad (13)$$

L'expression précédente est valide pour toute constellation, complexe ou réelle. Les termes $\left(E_s - \overline{v}_k^2\right)$ et $\left(\tilde{E}_s - \tilde{\overline{v}}_k^2\right)$ mesurent la progression de la convergence. A la première itération ils sont nuls, à la dernière itération $\hat{\Sigma} = \hat{\sigma}\mathbf{I}_{2N_R M}$ et la matrice au milieu vaut $\begin{bmatrix} E_s & \tilde{E}_s \\ \tilde{E}_s^* & E_s \end{bmatrix}$. Nous notons que le filtre égaliseur est un vecteur de taille $2N_R M$ et peut s'écrire aussi sous la forme $\mathbf{g}_{WL,k,m} = \begin{bmatrix} \mathbf{g}_{I,k,m} \\ \mathbf{g}_{Q,k,m} \end{bmatrix}$. $\mathbf{g}_{I,k,m}$ et $\mathbf{g}_{Q,k,m}$ sont des vecteurs de taille $N_R M$ qui filtrent respectivement les signaux et leur conjugués et constituent une des sorties du bloc 501 pour tout $k$ et tout $m$.

La matrice $\hat{\Sigma}$ est définie par:

$$\hat{\Sigma} = E_{k,m}\left[(\hat{\mathbf{r}} - E_{AP}[\hat{\mathbf{r}}])(\hat{\mathbf{r}} - E_{AP}[\hat{\mathbf{r}}])^H\right] = E_{k,m}\left[\hat{\mathbf{r}}\hat{\mathbf{r}}^H\right] = \begin{bmatrix} \mathbf{C_r} & \tilde{\mathbf{C}}_\mathbf{r} \\ \tilde{\mathbf{C}}_\mathbf{r}^* & \mathbf{C_r}^* \end{bmatrix} = \begin{bmatrix} \Sigma_{1,1} & \Sigma_{1,2} \\ \Sigma_{1,2}^* & \Sigma_{1,1}^* \end{bmatrix} \quad (14)$$

La matrice $\Sigma_{1,1}$ représente la matrice de covariance du signal reçu $\mathbf{r}$ formé par la concaténation des vecteurs $\mathbf{r}_n$ à l'entrée du bloc 100. Le vecteur $\mathbf{r}$ s'écrit sous la forme suivante :

$$\mathbf{r} = \mathbf{H}\left(\mathbf{I}_K \otimes \mathbf{F}_M\right)\mathbf{s} + \mathbf{w}$$

où $\mathbf{s}$ est formé par la concaténation des blocs de données $\mathbf{s}_k$ des $K$ utilisateurs et $\mathbf{w}$ est un vecteur de bruit blanc gaussien complexe de moyenne nulle et dont la variance est estimée à $\hat{\sigma}$. On peut donc écrire la matrice de covariance comme

$$\Sigma_{1,1} = E_{AP}\left[(\mathbf{r} - E_{AP}[\mathbf{r}])(\mathbf{r} - E_{AP}[\mathbf{r}])^H\right]$$

Où $E_{AP}[]$ est l'espérance mathématique calculée en utilisant les informations a priori en provenance des décodeurs et calculées pendant l'itération précédente.

A la première itération ces informations a priori sont fixées à zéro et la matrice de covariance prend la forme suivante

$$\Sigma_{1,1} = E_s \mathbf{H}\mathbf{H}^H + \hat{\sigma}\mathbf{I}_{N_R M}$$

où $E_s = E[|\mathbf{s}_k(m)|^2]$ pour tous $k = 1, ..., K,$ et $m = 1, ..., M$.

La covariance est une mesure de la corrélation entre la variation du signal par rapport à sa moyenne et la même variation conjuguée. Nous faisons ici l'hypothèse que les symboles émis des $K$ utilisateurs sont indépendants entre utilisateurs et les symboles de chaque utilisateur sont indépendants. Cela s'exprime par le fait que $E[\mathbf{s}_k \mathbf{s}_k^H] = E_s \mathbf{I}_M$, pour chaque utilisateur, et $E[\mathbf{s}\mathbf{s}^H] = E_s \mathbf{I}_{MK}$, pour le signal global. Après passage à travers le canal, les termes $\mathbf{H}$ dans la corrélation illustrent le fait que le canal multi-antennaire (entre les utilisateurs et les antennes du récepteur) introduit une corrélation, un lien entre les signaux reçus. Cela exprime le fait que les canaux entre les utilisateurs et le récepteur ne sont pas des « tubes » indépendants, mais il y a de l'interférence entre antennes. En effet $\Sigma_{1,1}$ est diagonale par bloc, mais elle a bien des termes non-nuls en dehors de la diagonale principale.

Aux itérations successives la matrice de covariance du signal reçu prend la forme suivante

$$\begin{aligned} \Sigma_{1,1} &= \mathcal{B}\left(diag\left(\overline{v}_0^2, ..., \overline{v}_{K-1}^2\right) \otimes \mathbf{I}_M\right)\mathcal{B}^H + \hat{\sigma}\mathbf{I}_{N_R M} \\ &= \mathbf{H}(diag(\overline{v}_1^2, ..., \overline{v}_k^2, ..., \overline{v}_K^2) \otimes \mathbf{I}_M)\mathbf{H}^H + \hat{\sigma}\mathbf{I}_{N_R M} \end{aligned} \quad (15)$$

Cette expression vaut pour toute constellation.

L'aspect multi-utilisateur est plus clairement décrit quand on calcule les $N_R$ x $N_R$ blocs de taille $M$ x $M$ de la matrice $\Sigma_{1,1}$ :

$$\left[\text{bloc}\,(p,q)\,\text{de}\,\mathbf{\Sigma}_{1,1}\right]_{p,q=1,\ldots,N_R} = \left[\sum_{k=0}^{K-1}\overline{\upsilon}_k^2\mathbf{H}_{p,k}\mathbf{H}_{q,k}^H\right]_{p,q=1,\ldots,N_R} + \delta_{p-q}\hat{\sigma}\mathbf{I}_M \qquad (16)$$

où $\delta_p = 1$ si p = 0 et $\delta_p = 0$ sinon. Les blocs peuvent être calculés rapidement car les matrices $\mathbf{H}_{p,k}$ sont des matrices diagonales. De plus $\Sigma_{1,1}$ est hermitienne $\left(\mathbf{\Sigma}_{1,1} = \mathbf{\Sigma}_{1,1}^H\right)$.

La matrice $\Sigma_{1,2}$ représente la matrice de pseudo-covariance du signal reçu **r**

$$\mathbf{\Sigma}_{1,2} = E_{AP}\left[\left(\mathbf{r} - E_{AP}[\mathbf{r}]\right)\left(\mathbf{r} - E_{AP}[\mathbf{r}]\right)^T\right]$$

La pseudo-covariance est une mesure de la corrélation entre le signal (sans sa moyenne, donc la variation du signal) avec la même variation. Puisqu'un signal complexe est formé d'une partie réelle et d'une partie imaginaire, donc de deux variables aléatoires, on a besoin de deux relations pour définir le comportement statistique d'un signal complexe. Les signaux complexes dont la distribution a une symétrie centrale autour de l'origine (ce que l'on appelle circularité), ont une pseudo-covariance nulle.

En introduisant le modèle de signal reçu dans la définition de la matrice de pseudo-covariance on peut écrire (on suppose un bruit gaussien complexe avec symétrie circulaire, ce qui donne une pseudo-covariance nulle pour ce bruit)

$$\mathbf{\Sigma}_{1,2} = \mathbf{H}(\mathbf{I}_K \otimes \mathbf{F}_M)E_{AP}\left[\left(\mathbf{s} - E_{AP}[\mathbf{s}]\right)\left(\mathbf{s} - E_{AP}[\mathbf{s}]\right)^T\right]\left(\mathbf{I}_K \otimes \mathbf{F}_M^T\right)\mathbf{H}^T + E_{AP}\left[\mathbf{w}\mathbf{w}^T\right] =$$
$$= \mathbf{H}(\mathbf{I}_K \otimes \mathbf{F}_M)\tilde{\mathbf{C}}_\mathbf{s}\left(\mathbf{I}_K \otimes \mathbf{F}_M^T\right)\mathbf{H}^T$$

Nous avons explicité la dépendance de la pseudo-covariance $\tilde{\mathbf{C}}_\mathbf{s}$ du signal émis pour mettre en lumière l'impact de la forme et de la statistique des symboles émis. Cette pseudo-covariance change selon la constellation et donne donc des implémentations différentes et aussi des possibilités de simplifications différentes dans le calcul de l'égaliseur en fonction de la forme de la covariance.

Puisque tous les symboles ont la même pseudo-covariance (hypothèse fondamentale mais pas limitative que l'on a fait) à la première itération, la matrice de pseudo-covariance du signal reçu devient alors

$$\mathbf{\Sigma}_{1,2} = \tilde{E}_s\mathbf{H}\left(\mathbf{I}_K \otimes \mathbf{F}_M\right)\left(\mathbf{I}_K \otimes \mathbf{F}_M^T\right)\mathbf{H}^T + E_{AP}\left[\mathbf{w}\mathbf{w}^T\right] =$$
$$= \tilde{E}_s\mathbf{H}\left(\mathbf{I}_K \otimes \left(\mathbf{F}_M\mathbf{F}_M^T\right)\right)\mathbf{H}^T = \tilde{E}_s\mathbf{H}\left(\mathbf{I}_K \otimes \mathbf{J}\right)\mathbf{H}^T \qquad (17)$$

Nous avons défini

$$\mathbf{J} = \mathbf{F}_M\mathbf{F}_M^T = \begin{bmatrix} 1 & 0 & \cdots & 0 \\ 0 & \cdot\cdot\cdot & \cdot\cdot\cdot & 1 \\ \vdots & \cdot\cdot\cdot & \cdot\cdot\cdot & 0 \\ 0 & 1 & 0 & 0 \end{bmatrix} \qquad (18)$$

Qui en fait représente la pseudo-covariance des symboles dans le domaine fréquentiel normalisée par la valeur $\tilde{E}_s$.

Il convient de noter ici que la matrice de pseudo-covariance du signal reçu dépend de la pseudo-covariance $\tilde{E}_s$ des symboles émis qui est non nulle pour les modulations ayant une constellation vérifiant la propriété dite de non-circularité tel qu'explicité au début de la présente description.

Aux itérations successives la matrice de pseudo-covariance du signal reçu peut s'écrire

$$\mathbf{\Sigma}_{1,2} = \mathcal{B}\left(diag\left(\tilde{\overline{\upsilon}}_0^2,\ldots,\tilde{\overline{\upsilon}}_{K-1}^2\right) \otimes \mathbf{I}_M\right)\mathcal{B}^T = \mathbf{H}\left(diag\left(\tilde{\overline{\upsilon}}_0^2,\ldots,\tilde{\overline{\upsilon}}_{K-1}^2\right) \otimes \mathbf{J}\right)\mathbf{H}^T \qquad (19)$$

L'aspect multi-utilisateur est plus clairement décrit quand on calcule les $N_R$ x $N_R$ blocs de taille $M$ x $M$ de la

matrice $\Sigma_{1,2}$ qui s'écrivent :

$$\left[\text{bloc}(p,q)\,\text{de}\,\Sigma_{1,2}\right]_{p,q=1,\ldots,N_R} = \left[\sum_{k=0}^{K-1}\tilde{\overline{v}}_k^2\,\mathbf{H}_{p,k}\mathbf{J}\mathbf{H}_{q,k}^T\right]_{p,q=1,\ldots,N_R} \tag{20}$$

Et peuvent être calculés rapidement car les matrices $\mathbf{H}_{p,k}$ sont des matrices diagonales. De plus $\Sigma_{1,2}$ est une matrice symétrique complexe ( $\Sigma_{1,2}^T = \Sigma_{1,2}$ ).

Les matrices de covariance et de pseudo-covariance permettent de caractériser complètement la statistique d'ordre 2 d'un signal complexe. Pour des signaux circulaires (e.g. en considérant une constellation QAM symétrique), la pseudo-covariance est nulle. Les matrices de covariance et pseudo-covariance calculées ici, permettent de prendre en considération l'aspect multi-utilisateur.

Les estimations des amplitudes du signal utile et de son conjugué peuvent être calculés comment il suit :

$$\eta_{I,k} = \mathbf{g}_{I,k,m}^H \hat{\overline{b}}_{k,m}; \quad \eta_{Q,k} = \mathbf{g}_{Q,k,m}^H \hat{\overline{b}}_{k,m}^*$$

Nous notons que l'indice du symbole *m* est omis parce qu'il peut être montré que cette quantité est indépendante de l'indice de symbole et dépend seulement de l'indice de l'utilisateur. Donc pour le calcul on peut choisir un indice *m* quelconque. Des façons efficaces de calculer ces quantités existent, mais elles ne sont pas détaillées ici pour le cas de constellations complexes. Elles le seront pour le cas de constellations réelles.

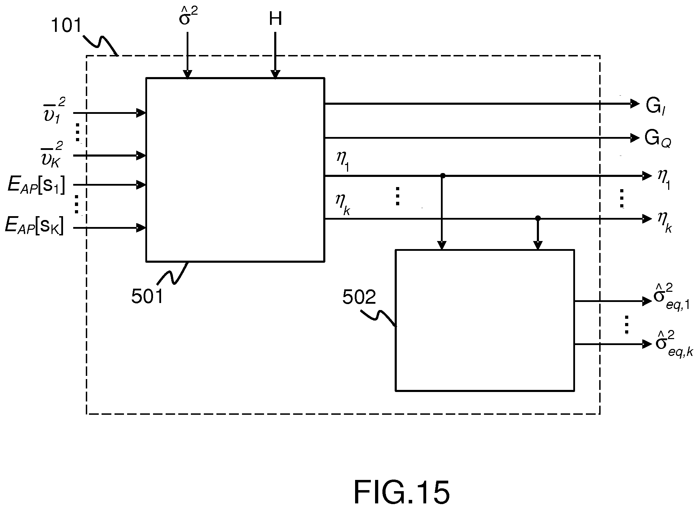

La figure 15 présente le schéma fonctionnel du calcul de l'égaliseur dans le cas de signaux modulés par des constellations réelles de type M-PAM ou BPSK. La contrainte de constellations réelles permet de simplifier la réalisation du bloc 101.

Dans le cas de constellations réelles, l'expression (13) de l'égaliseur se simplifie par l'expression suivante :

$$\begin{aligned}\mathbf{g}_{WL,k,m} &= E_s\left\{\hat{\Sigma} + \left(E_s - \overline{v}_k^2\right)\begin{bmatrix}\hat{\overline{b}}_{k,m}\\\hat{\overline{b}}_{k,m}^*\end{bmatrix}\begin{bmatrix}\hat{\overline{b}}_{k,m}^H & \hat{\overline{b}}_{k,m}^T\end{bmatrix}\right\}^{-1}\begin{bmatrix}\hat{\overline{b}}_{k,m}\\\hat{\overline{b}}_{k,m}^*\end{bmatrix}\\[2mm] &= E_s\left\{\hat{\Sigma} + \left(E_s - \overline{v}_k^2\right)\hat{\overline{b}}_{k,m}\hat{\overline{b}}_{k,m}^H\right\}^{-1}\hat{\overline{b}}_{k,m}\end{aligned} \tag{21}$$

L'expression précédente peut être simplifiée comme suit

$$\mathbf{g}_{WL,k,m} = \frac{E_s}{1+\lambda_k}\hat{\Sigma}^{-1}\hat{\overline{b}}_{k,m}, \qquad \lambda_k = \left(E_s - \overline{v}_k^2\right)\hat{\overline{b}}_{k,m}^H\hat{\Sigma}^{-1}\hat{\overline{b}}_{k,m} \tag{22}$$

Le filtre pour le symbole m de l'utilisateur k dépend des informations souples à travers la matrice $\hat{\Sigma}$, parce que cette matrice contient les estimations des covariances des symboles émis, et à travers le facteur $1+\lambda_k$, qui est un facteur de normalisation de l'énergie du filtre qui dépend lui aussi des informations souples en provenance des décodeurs. Ces facteurs $\lambda_k$ sont indépendants de l'indice *m* du symbole et dépendent seulement de l'utilisateur Ceci permet de rassembler un filtre par utilisateur en réunissant les filtres de tous les symboles de l'utilisateur considéré

$$\mathbf{G}_{WL,k} = \frac{E_s}{1+\lambda_k}\hat{\Sigma}^{-1}\begin{bmatrix}\mathbf{H}\\\mathbf{H}^*\left(\mathbf{I}_K\otimes\mathbf{J}\right)\end{bmatrix}\left(\mathbf{e}_K\otimes\mathbf{F}_M\right)$$

Ce filtre, qui a une taille de $2N_R M\ x\ M,$ peut être convenablement calculé en utilisant la propriété que les matrices ont une structure diagonale par bloc ou la structure spécifique de la matrice **J**. Nous remarquons que la matrice $(\mathbf{e}_K\otimes\mathbf{F}_M)$ représente la transformée inverse (quand le filtre est appliqué) du domaine temporel à celui fréquentiel, et les autres termes représentent le filtre en fréquence à proprement parler.

En concaténant ensemble tous les filtres des utilisateurs on obtient la matrice de taille $2N_R M\ x\ KM,$ du filtre global qui peut donc s'écrire

$$\mathbf{G}_{WL} = \mathcal{G}_{WL}(\mathbf{I}_K \otimes \mathbf{F}_M)$$

Où le terme ($\mathbf{I}_K \otimes \mathbf{F}_M$) indique le set de DFT inverses à la sortie du filtre. $\boldsymbol{G}_{WL}$ est la matrice $2N_R M$ x $KM$ du filtre en fréquence

$$\mathcal{G}_{WL} = \begin{bmatrix} \mathcal{G}_I \\ \mathcal{G}_Q \end{bmatrix} = E_s \hat{\boldsymbol{\Sigma}}^{-1} \begin{bmatrix} \mathbf{H} \\ \mathbf{H}^*(\mathbf{I}_K \otimes \mathbf{J}) \end{bmatrix} (\mathbf{D} \otimes \mathbf{I}_M)$$

et

$$\mathbf{D} = diag\left( \frac{1}{1+\lambda_0}, \cdots, \frac{1}{1+\lambda_{K-1}} \right). \tag{23}$$

est la matrice diagonale de taille $K$ x $K$ qui collecte les facteurs de normalisation réels des différents utilisateurs. A la première itération, quand il n'y a pas d'information souple en provenance du décodeur, $\overline{\upsilon}_k^2 = E_s$ et $\lambda_k = 0$ et donc la matrice D est l'identité de taille $K$ x $K$, ce qui indique qu'il n'y a pas d'influence des informations a priori sur le calcul de l'égaliseur à la première itération.

Il est possible de calculer d'une façon efficace ce filtre en notant que

$$\hat{\boldsymbol{\Sigma}} = \begin{bmatrix} \boldsymbol{\Sigma}_{1,1} & \boldsymbol{\Sigma}_{1,2} \\ \boldsymbol{\Sigma}_{1,2}^* & \boldsymbol{\Sigma}_{1,1}^* \end{bmatrix}$$

Alors la matrice de covariance du signal reçu, dans le cas de constellations réelles, s'écrit à la première itération

$$\boldsymbol{\Sigma}_{1,1} = E_s \mathbf{H}\mathbf{H}^H + \hat{\sigma}\mathbf{I}_{N_R M} \tag{24}$$

Et aux itérations successives

$$\boldsymbol{\Sigma}_{1,1} = \mathbf{H}(diag(\overline{\upsilon}_1^2,\ldots,\overline{\upsilon}_k^2,\ldots,\overline{\upsilon}_K^2) \otimes \mathbf{I}_M)\mathbf{H}^H + \hat{\sigma}\mathbf{I}_{N_R M}$$

A la première itération les informations a priori ne sont pas définies et la matrice de pseudo-covariance prend la forme suivante

$$\boldsymbol{\Sigma}_{1,2} = E_s \mathbf{H}(\mathbf{I}_K \otimes \mathbf{J})\mathbf{H}^T$$

où $\tilde{E}_s = E[(\mathbf{s}_k(m))^2]$ est la pseudo-covariance du symbole $\mathbf{s}_k(m)$ et on suppose ici qu'elle est égale pour tous $k = 1, \ldots, K,$ et $m = 1, \ldots, M.$ Nous notons que pour les constellations réelles (la dérivation ici est faite dans ce cas) telles que la BPSK et la PAM, l'égalité suivante est vraie : $\tilde{E}_s = E_s.$ La matrice **J** est définie comme suit :

$$\mathbf{J} = \mathbf{F}_M \mathbf{F}_M^T = \begin{bmatrix} 1 & 0 & \cdots & 0 \\ 0 & \cdot^{\cdot} & \cdot^{\cdot} & 1 \\ \vdots & \cdot^{\cdot} & \cdot^{\cdot} & 0 \\ 0 & 1 & 0 & 0 \end{bmatrix}$$

Aux itérations successives, quand l'information souple en provenance des décodeurs est non nulle, la pseudo-covariance prend la forme

$$\Sigma_{1,2} = \mathbf{H}(diag\,(\overline{v}_1^2,\dots,\overline{v}_k^2,\dots,\overline{v}_K^2) \otimes \mathbf{J})\mathbf{H}^T$$

Nous notons que les termes $\overline{v}_k^2$ ici sont égaux à ceux présents dans la matrice de covariance simplement parce que pour des constellations réelles $(s_k(m))^2 = |s_k(m)|^2$ ; cela n'est pas vrai en général.

Notons que $\Sigma_{1,1}$ est une matrice diagonale par bloc et que $\Sigma_{1,2}$ est une matrice par bloc où chaque bloc a la structure de la matrice **J**. On dira par la suite que la matrice a une structure **J** par bloc.

A partir de la matrice $\hat{\Sigma}$ de covariance du signal reçu concaténé à son conjugué $\hat{\mathbf{r}}$, la fonction calcule les blocs de la matrice inverse suivante, qui est nécessaire pour calculer l'égaliseur final dérivé selon le critère de minimisation de l'erreur quadratique moyenne (Minimum Mean Square Error - MMSE) :

$$\hat{\Sigma}^{-1} = \begin{bmatrix} \mathbf{S}_1 & \mathbf{S}_2 \\ \mathbf{S}_2^* & \mathbf{S}_1^* \end{bmatrix}$$

qui peut être calculée soit sur la matrice globale, soit en utilisant l'identité

$$\begin{bmatrix} \mathbf{A} & \mathbf{B} \\ \mathbf{C} & \mathbf{D} \end{bmatrix}^{-1} = \begin{bmatrix} (\mathbf{A}-\mathbf{B}\mathbf{D}^{-1}\mathbf{C})^{-1} & -(\mathbf{A}-\mathbf{B}\mathbf{D}^{-1}\mathbf{C})^{-1}\mathbf{B}\mathbf{D}^{-1} \\ -(\mathbf{D}-\mathbf{C}\mathbf{A}^{-1}\mathbf{B})^{-1}\mathbf{C}\mathbf{A}^{-1} & (\mathbf{D}-\mathbf{C}\mathbf{A}^{-1}\mathbf{B})^{-1} \end{bmatrix}$$

Et dans notre cas les blocs s'écrivent ainsi

$$\begin{aligned} \mathbf{S}_1 &= (\Sigma_{1,1} - \Sigma_{1,2}\Sigma_{1,1}^{*\,-1}\Sigma_{1,2}^*)^{-1} \\ \mathbf{S}_2 &= -\mathbf{S}_1\Sigma_{1,2}\Sigma_{1,1}^{*\,-1} \end{aligned} \qquad (25)$$

Nous notons que, vu la structure des matrices en question, les inverses reviennent à calculer M fois des inverses de matrice de taille $N_R$ x $N_R$. Notons encore que $\hat{\Sigma}^{-1}$ est hermitienne. Alors, $\mathbf{S}_1^H = \mathbf{S}_1$ est aussi hermitienne, et $\mathbf{S}_2^T = \mathbf{S}_2$ est symétrique et complexe. Ces matrices sont utilisées pour former les matrices d'égalisation finales.

$$G_{WL} = E_s \begin{bmatrix} G_I \\ G_Q \end{bmatrix} = \begin{bmatrix} \mathbf{S}_1 & \mathbf{S}_2 \\ \mathbf{S}_2^* & \mathbf{S}_1^* \end{bmatrix}\begin{bmatrix} \mathbf{H} \\ \mathbf{H}^*(\mathbf{I}_K \otimes \mathbf{J}) \end{bmatrix}(\mathbf{D} \otimes \mathbf{I}_M) = E_s \begin{bmatrix} \mathbf{S}_1\mathbf{H}(\mathbf{D}\otimes\mathbf{I}_M)+\mathbf{S}_2\mathbf{H}^*(\mathbf{D}\otimes\mathbf{J}) \\ \mathbf{S}_2^*\mathbf{H}(\mathbf{D}\otimes\mathbf{I}_M)+\mathbf{S}_1^*\mathbf{H}^*(\mathbf{D}\otimes\mathbf{J}) \end{bmatrix} \quad (26)$$

Nous notons qu'ici aussi les matrices de l'égaliseur peuvent être calculées rapidement parce qu'elles sont des produits de matrices diagonales par bloc ou avec structure J par bloc. Les coefficients de l'égaliseur $G_Q$ peuvent être calculés à partir de ceux de $G_I$ par simple conjugaison et permutation. En effet, dans le cas de constellation réelles,

$$G_Q = G_I^*(\mathbf{I}_M \otimes \mathbf{J})\,.$$

Seule la matrice $G_I$ est par conséquent nécessaire. Le terme Es est un facteur de design de la constellation de la modulation employée. Il peut être pris égal à 1.

De plus, définissons les matrices suivantes, qui peuvent être calculées en prenant en compte la structure diagonale ou **J** par bloc :

$$\Lambda_1 = \mathbf{H}^H\mathbf{S}_1\mathbf{H}; \qquad \Lambda_2 = \mathbf{H}^T\mathbf{S}_2^*\mathbf{H}\,. \qquad (27)$$

Alors les coefficients $\lambda_k$, k = 1, ..., K, qui mesurent l'influence sur l'égaliseur des informations souples qui viennent des décodeurs, s'écrivent :

$$\lambda_k = \frac{2(E_s - \overline{v}_k^2)}{M} \operatorname{Re}\left[\operatorname{tr}\left([\boldsymbol{\Lambda}_1]_{k,k}\right) + \operatorname{tr}\left(\mathbf{J}[\boldsymbol{\Lambda}_2]_{k,k}\right)\right]. \qquad (28)$$

Notons que les coefficients précédents sont indépendants de *m,* et peuvent être calculés une seule fois pour tous les symboles de manière efficace, simplement en utilisant les coefficients diagonaux des matrices diagonales par bloc $\boldsymbol{\Lambda}_1$ et $(\mathbf{I}_K \otimes \mathbf{J})\boldsymbol{\Lambda}_2$ qui sont de taille *KM* x *KM.*

Les coefficients $\eta_k$ pour k = 1, ..., K, donnent une mesure de l'amplitude moyenne des signaux utiles après égalisation

$$\eta_k = \frac{\lambda_k}{1+\lambda_k} \frac{E_s}{(E_s - \overline{v}_k^2)} = \frac{2E_s}{M(1+\lambda_k)} \operatorname{Re}\left[\operatorname{tr}\left([\boldsymbol{\Lambda}_1]_{k,k}\right) + \operatorname{tr}\left(\mathbf{J}[\boldsymbol{\Lambda}_2]_{k,k}\right)\right]$$

L'expression ci-dessus montre que $\eta_k$ est indépendant de l'indice *m* à l'intérieur du bloc de données. A la première itération, quand il n'y a pas d'information souple en provenance du décodeur, $\overline{v}_k^2 = E_s$ et $\lambda_k = 0$, et donc $\eta_k$ devient exactement celui d'un égaliseur MIMO linéaire au sens large dans un récepteur non-itératif.

Le bloc (502) calcule les estimées $\hat{\sigma}_{eq,k}^2$ , k = 1, ..., *K* de la variance du bruit après égalisation pour chaque utilisateur

$$\hat{\sigma}_{eq,k}^2 = E_s \eta_k (1 - \eta_k)$$

On décrit à présent une autre variante de réalisation de l'invention applicable à des signaux modulés avec une constellation du type $\pi/2$-M-PAM ou $\pi/2$-BPSK.

Selon cette variante, l'étape $13_k$ de modulation du signal émis utilise des constellations réelles, par exemple M-PAM ou BPSK, mais une rotation de phase de $\pi/2$ est appliquée à tous les symboles pairs de chaque utilisateur.

Ce type de modulation permet de baisser le rapport entre la puissance de pic et la puissance moyenne du signal émis, réduisant ainsi les contraintes de l'amplificateur de puissance par rapport aux constellations qui ne subissent pas de rotation. En indiquant avec *j* l'unité imaginaire, la suite des symboles émis par un utilisateur sera alors : $c_k(1) = s_k(1)$, $c_k(2) = js_k(2)$, $c_k(3) = s_k(3)$, $c_k(4) = js_k(4)$, etc..

Nous notons aussi que la fonction de mise en trame 14 divise les symboles de données modulés en blocs de *M* symboles émis. Nous supposons dans la suite que *M* est pair. Avec *M* impair la matrice de covariance sera pleine et la complexité de calcul de l'égaliseur sera plus importante, ce cas ne sera donc pas traité ici. Les blocs de données peuvent s'écrire comme :

$$\mathbf{c}_k = \operatorname{diag}([\ 1\ j\ 1\ j\ \dots\ 1\ j]) \mathbf{s}_k = \operatorname{diag}(\boldsymbol{\varphi})\, \mathbf{s}_k$$

Il est immédiat de vérifier que la matrice de covariance d'une telle constellation est $E[\mathbf{cc}^H] = E[\mathbf{ss}^H] = E_s\, \mathbf{I}_{MK}$.

La fonction de mise en trame dans ce cas utilise une mise en trame avec préfixe CP et éventuellement suffixe CS.

Des modifications sur le récepteur sont nécessaires pour cette variante d'utilisation, elles sont détaillées dans la suite.

La structure globale de l'égaliseur 100 décrite en figure 8 reste la même. Cependant certains sous-blocs doivent être modifiés.

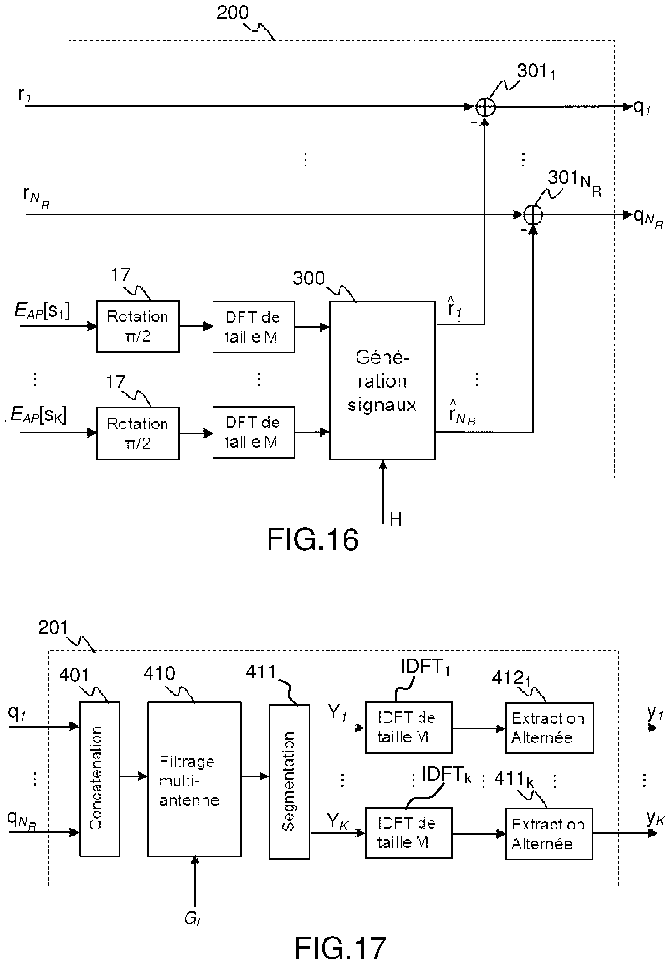

Le bloc de suppression d'interférences 200 est détaillé à nouveau en figure 16. Il transforme chaque vecteur de taille *M* contenant les estimées souples des symboles émis $E_{AP}[\mathbf{s}_k]$, k = 1,... K en fréquence au travers d'une transformée de Fourier directe DFT de taille *M.* Les estimées souples, qui ont des valeurs réelles dans cette variante de réalisation, aux indices impairs du bloc d'entrée sont laissées inchangées, celles d'index pair sont multipliées par l'unité imaginaire *j.* Cette opération est réalisée par le bloc 17. Ensuite, le reste du bloc 200 opère comme avant. Il s'agit donc dans ce cas aussi de générer une estimée des signaux reçus des différents utilisateurs à partir d'une estimée du canal **H** et de soustraire cette estimée au signal reçu pour obtenir un signal correctif. Les $N_R$ vecteurs de taille *M* en sortie du bloc 200 ainsi modifiés concaténés ensemble en un unique vecteur peuvent donc s'écrire sous la forme : $\mathbf{q} = \mathbf{r} - \mathbf{H}(\mathbf{I}_K \otimes \mathbf{F}_M diag(\varphi))) E_{AP}[\mathbf{s}]$ de taille $N_R M$, avec $\varphi = [1\ j... \ 1\ j]$ vecteur de taille *M.*

Le bloc 201 de filtrage linéaire au sens large est aussi légèrement modifié dans le cadre des constellations réelles tournées et est décrit à nouveau en figure 17. L'entrée est filtrée par un filtre $\boldsymbol{G}_l$ comme dans les cas des constellations réelles (non tournées) mais avec des coefficients différents. Après passage dans le domaine temporel (IDFT), un nouveau bloc 412 d'extraction alternée doit être ajouté. Ce bloc réalise conjointement la rotation des symboles de la constellation et la combinaison correcte qui permet d'exploiter le fait que la constellation d'origine est réelle. Considérons un vecteur $\mathbf{a}$ = [$a(1)$ ... $a(M)$] de taille $M$ pair en entrée du bloc 412, alors le vecteur $\mathbf{b}$ = [$b(1)$ ... $b(M)$] de taille $M$ en sortie s'écrit :

$$b(2m - 1) = 2\,\mathrm{Re}[a(2m - 1)], \quad m = 1, ..., M/2$$

$$b(2m) = 2\,\mathrm{Im}[a(2m)], \quad m = 1, ..., M/2$$

où Re() et Im() sont respectivement l'extraction de la partie réelle et imaginaire de l'argument. En effet le bloc 412 extrait alternativement la partie réelle et imaginaire du vecteur en entrée et les multiplies par 2.

En effet, pour des constellations réelles tournées il est possible de montrer que le filtre $\boldsymbol{G}_I$ (qui filtre le signal) et le filtre $\boldsymbol{G}_Q$ (qui filtre le signal conjugué) sont liés par la relation suivante :

$$\boldsymbol{G}_Q = \boldsymbol{G}_I^* (\mathbf{I}_M \otimes \mathbf{J}_{M/2})$$

où la matrice $\mathbf{J}_{M/2}$ est définie comme suit

$$\mathbf{J}_{M/2} = \mathbf{F}_M diag\big([1 \quad -1 \quad \cdots \quad 1 \quad -1]\big)\mathbf{F}_M^T = \mathbf{F}_M diag(\varphi_1)\mathbf{F}_M^T . \tag{29}$$

Comme la matrice $\mathbf{J}$ dans le cas des constellations réelles, $\mathbf{J}_{M/2}$ est une permutation de la matrice identité, une anti-diagonale de valeurs à 1 commence à l'entrée ($M/2+1$, 1) de la matrice. Les valeurs 1 sont donc localisées dans les entrées ([$(M/2-m)$ mod $M$] +1, $m$), pour $m$ = 1, ..., $M$. $\mathbf{J}_{M/2}$ a les mêmes propriétés que la matrice $\mathbf{J}$. La multiplication par cette matrice peut être implémentée par des permutations.

En appelant $\mathbf{q}$ le vecteur obtenu par concaténation de tous les vecteurs $\mathbf{q}_n$, $n$ = 1, ..., $N_R$, et $\mathbf{y}$ le vecteur obtenu par concaténation des vecteurs $\mathbf{y}_k$, $k$ = 1, ..., $K$, en utilisant la propriété précédente le vecteur de symboles égalisés peut s'écrire ainsi

$$\mathbf{Y} = \boldsymbol{G}_I^H \mathbf{q} + (\mathbf{I}_M \otimes \mathbf{J}_{M/2})\big(\boldsymbol{G}_I^H\big)^* \mathbf{q}^* = \boldsymbol{G}_I^H \mathbf{q} + (\mathbf{I}_M \otimes \mathbf{J}_{M/2})\big(\boldsymbol{G}_I^H \mathbf{q}\big)^*$$

En dénotant $\mathbf{q}_{I,t} = (\mathbf{I}_K \otimes \mathbf{F}_M^H)(\boldsymbol{G}_I^H \mathbf{q})$ le signal dans le temps après filtrage par le filtre $\boldsymbol{G}_I$ il est possible de démontrer que, le signal passé dans le temps et passé à travers le bloc 412 peut s'écrire

$$\mathbf{y} = (\mathbf{I}_K \otimes (diag(\varphi^*)\mathbf{F}_M^H))\mathbf{Y} = (\mathbf{I}_K \otimes diag(\varphi^*))\big[\mathbf{q}_{I,t} + (\mathbf{I}_M \otimes diag(\varphi_1))\mathbf{q}_{I,t}^*\big]$$

Ce qui est la description mathématique des opérations faites par le bloc 412.

Le bloc 202 à utiliser est celui dans le cas de constellations réelles et il est décrit en figure 13. Il reste inchangé. Seulement les valeurs numériques des facteurs $\eta_k$ pour $k$ = 1, ..., $K$, changent.

Pour ce qui concerne le bloc 101 qui calcule l'égaliseur et des paramètres pour le demapper souple, la structure reste la même qu'en figure 15.

Le bloc 502 qui calcule les variances des bruits après égalisation reste inchangé par rapport au cas de constellations réelles.

Le bloc 501 doit avoir les modifications suivantes.

Les expressions (21) et (22) restent les mêmes mais la matrice $\hat{\Sigma}$, les vecteurs $\hat{b}_{k,m}$ et les coefficients $\lambda_k$ changent. En effet, dans le cas de constellations réelles tournées les quantités des équations précédentes sont

$$\mathcal{B} = \mathbf{H}(\mathbf{I}_K \otimes \mathbf{F}_M)(\mathbf{I}_K \otimes diag(\varphi)); \quad b_{k,m} = \mathbf{H}(\mathbf{I}_K \otimes \mathbf{F}_M)(\mathbf{I}_K \otimes diag(\varphi))\mathbf{e}_{m+(k-1)M} \tag{30}$$

La matrice $\overset{\wedge}{\Sigma}$ s'écrit encore dans sa forme générique (14). Ses sous-matrices prennent les formes suivantes qui permettent de donner une façon efficace d'implémenter le calcul de la matrice de covariance et de son inverse.

Il est simple de démontrer que pour les constellations réelles tournées, la matrice de covariance des symboles tournées est la même que celle des symboles réels non-tournées. Cela implique que la matrice de covariance du signal reçu à la première itération et aux itérations successives s'écrit respectivement $\Sigma_{1,1} = E_s\mathbf{H}\mathbf{H}^H + \overset{\wedge}{\sigma}\mathbf{I}_{N_RM}$ et

$$\Sigma_{1,1} = \mathbf{H}(diag(\overline{v}_1^2,...,\overline{v}_k^2,...,\overline{v}_K^2) \otimes \mathbf{I}_M)\mathbf{H}^H + \hat{\sigma}\mathbf{I}_{N_RM}$$ exactement comme dans le cas de constellations réelles.

La différence apparaît pour la matrice $\Sigma_{1,2}$ de pseudo-covariance du signal reçu. Il est simple de démontrer qu'à la première itération (les informations a priori ne sont pas définies) la matrice de pseudo-covariance prend la forme suivante

$$\Sigma_{1,2} = E_s\mathbf{H}(\mathbf{I}_K \otimes \mathbf{J}_{M/2})\mathbf{H}^T$$

où $\tilde{E}_s = E[(s_k(m))^2] = E_s$ comme dans le cas des constellations réelles. La matrice $\mathbf{J}_{M/2}$ est définie dans l'équation (29) et son application peut être implémentée par une simple permutation. La matrice $\mathbf{J}_{M/2}$ représente une translation de $M/2$ échantillons dans l'axe fréquentiel d'un signal discret et périodique. La matrice $\mathbf{J}_{M/2}$ est l'opération correspondante à la multiplication du signal $\varphi_1 = [1\ -1\ ...\ 1\ -1]$ dans le temps qui peut être vu comme une modulation par un signal périodique $[1\ -1]$.

Aux itérations successives, quand l'information souple en provenance des décodeurs est non nulle, la pseudo-covariance prend la forme

$$\Sigma_{1,2} = \mathbf{H}(diag(\overline{v}_1^2,...,\overline{v}_k^2,...,\overline{v}_K^2) \otimes \mathbf{J}_{M/2})\mathbf{H}^T$$

Nous notons donc que la matrice de pseudo-covariance pour des constellations réelle tournées a la même structure que celle de la matrice de pseudo-covariance pour des constellations réelles avec l'unique différence que $\mathbf{J}_{M/2}$ prend la place de $\mathbf{J}$. Cela donne dans les calculs une permutation différente.

Notons que $\Sigma_{1,1}$ est une matrice diagonale par bloc et que $\Sigma_{1,2}$ est une matrice par bloc où chaque bloc a la structure de la matrice $\mathbf{J}_{M/2}$. On dira par la suite que la matrice a une structure $\mathbf{J}_{M/2}$ par bloc.

On calcule par la suite les matrices $\mathbf{S}_1$ et $\mathbf{S}_2$ à travers la formule (25), qui peut être implémentée de façon moins complexe grâce à la structure des matrices en jeu. Les matrices $\mathbf{S}_1$ et $\mathbf{S}_2$ ont les mêmes propriétés que dans le cas de constellations réelles. On calcule aussi les matrices $\Lambda_1$ et $\Lambda_2$ comme dans (27). Les coefficients $\lambda_k$, $k = 1, ..., K$, qui mesurent l'influence sur l'égaliseur des informations souples qui viennent des décodeurs, s'écrivent d'une façon légèrement modifié par rapport à (28) :

$$\lambda_k = \frac{2(E_s - \overline{v}_k^2)}{M}\text{Re}\left[\text{tr}([\Lambda_1]_{k,k}) + \text{tr}(\mathbf{J}_{M/2}[\Lambda_2]_{k,k})\right]. \qquad (31)$$

Comme dans le cas de constellations réelles, on peut démontrer que ces coefficients sont indépendants de m, et peuvent être calculés une seule fois pour tous les symboles de manière efficace, simplement en utilisant les coefficients diagonaux des matrices diagonales par bloc $\Lambda_1$ et $(\mathbf{I}_K \otimes \mathbf{J}_{M/2})\Lambda_2$ qui sont de taille $KM$ x $KM$.

Les coefficients $\eta_k$ pour $k = 1, ..., K$, donnent une mesure de l'amplitude moyenne des signaux utiles après égalisation et se calculent comme dans le cas de constellations réelles, en fonction des $\lambda_k$.

$$\eta_k = \frac{\lambda_k}{1+\lambda_k}\frac{E_s}{(E_s - \overline{v}_k^2)} = \frac{2E_s}{M(1+\lambda_k)}\text{Re}\left[\text{tr}([\Lambda_1]_{k,k}) + \text{tr}(\mathbf{J}_{M/2}[\Lambda_2]_{k,k})\right]$$

L'expression ci-dessus montre que $\eta_k$ est indépendant de l'indice $m$ à l'intérieur du bloc de données. A la première itération, quand il n'y a pas d'information souple en provenance du décodeur, $\overline{v}_k^2 = E_s$ et $\lambda_k = 0$, et donc $\eta_k$ devient exactement celui d'un égaliseur MIMO linéaire au sens large dans un récepteur non-itératif.

En concaténant tous les filtres (22) et en utilisant (30), en mettant en facteur l'opération de DFT $\mathbf{F}_M$ et la rotation $(diag(\varphi))$, il est possible d'écrire la matrice du filtre global de taille $2N_RM$ x $KM$,

$$\mathbf{G}_{WL} = \mathcal{G}_{WL}(\mathbf{I}_K \otimes \mathbf{F}_M diag(\varphi))$$

$\mathcal{G}_{WL}$ est la matrice $2N_R M$ x $KM$ du filtre en fréquence

$$\mathcal{G}_{WL} = \begin{bmatrix} \mathcal{G}_I \\ \mathcal{G}_Q \end{bmatrix} = E_s \hat{\mathbf{\Sigma}}^{-1} \begin{bmatrix} \mathbf{H} \\ \mathbf{H}^*(\mathbf{I}_K \otimes \mathbf{J}_{M/2}) \end{bmatrix}(\mathbf{D} \otimes \mathbf{I}_M)$$

On applique au signal la matrice

$$\mathbf{G}_{WL}^H = (\mathbf{I}_K \otimes diag(\varphi^*)\mathbf{F}_M^H)\mathcal{G}_{WL}^H$$

faisant donc apparaître la transformée de Fourier inverse IDFT $\mathbf{F}_M^H$ et la de-rotation $diag(\varphi^*)$.

$\mathcal{G}_{WL}$ a la même structure que le filtre dans le cas de constellations réelles avec la matrice $\mathbf{J}_{M/2}$ à la place de **J**, les coefficients $\lambda_k$ calculés avec (31) et **D** est calculée comme en (23).

En suivant les développements du cas de constellations réelles, $\mathcal{G}_{WL}$ peut aussi s'exprimer dans la forme suivante

$$\mathcal{G}_{WL} = \begin{bmatrix} \mathcal{G}_I \\ \mathcal{G}_Q \end{bmatrix} = E_s \begin{bmatrix} \mathbf{S}_1\mathbf{H}(\mathbf{D} \otimes \mathbf{I}_M) + \mathbf{S}_2\mathbf{H}^*(\mathbf{D} \otimes \mathbf{J}_{M/2}) \\ \mathbf{S}_2^*\mathbf{H}(\mathbf{D} \otimes \mathbf{I}_M) + \mathbf{S}_1^*\mathbf{H}^*(\mathbf{D} \otimes \mathbf{J}_{M/2}) \end{bmatrix} \tag{32}$$

Nous notons qu'ici aussi les matrices de l'égaliseur peuvent être calculées rapidement parce qu'elles sont des produits de matrices diagonales par bloc ou avec structure $\mathbf{J}_{M/2}$ par bloc. En effet, comme expliqué plus haut, dans le cas de constellation réelles tournées,

$$\mathcal{G}_Q = \mathcal{G}_I^*(\mathbf{I}_M \otimes \mathbf{J}_{M/2}) \; .$$

Seule la matrice $\mathcal{G}_I$ est par conséquent nécessaire.

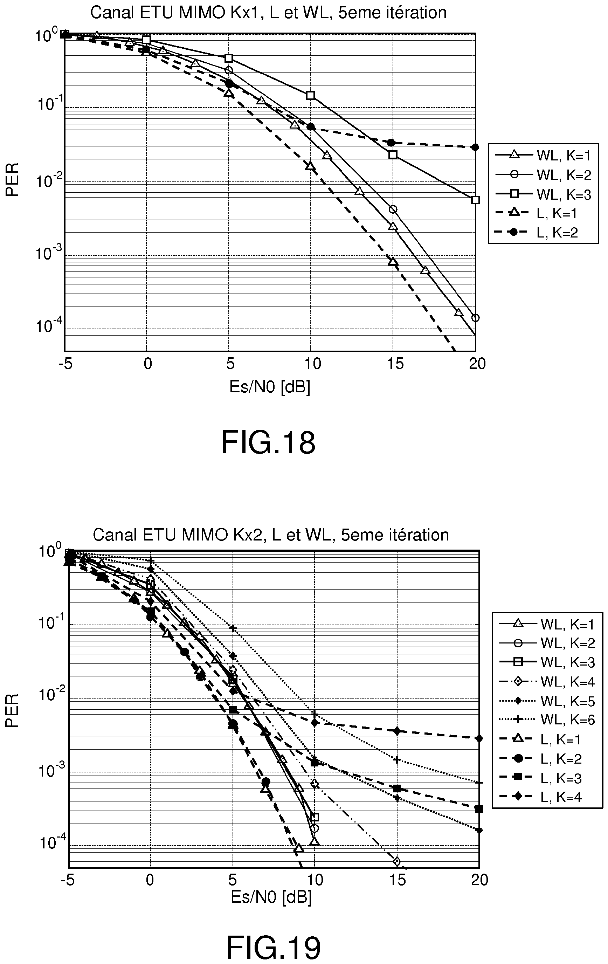

Les figures 18 et 19 illustrent les performances, en taux d'erreur paquet, obtenus grâce au procédé d'égalisation selon l'invention.

Les figures 18 et 19 montrent le taux d'erreur paquet dans un système SC-FDMA en canal ETU pour un turbo-égaliseur linéaire de l'art antérieur avec QPSK et code convolutif de taux 1/3 et pour un turbo-égaliseur linéaire au sens large selon l'invention avec 4-PAM et code convolutif de taux 1/3. La figure 18 montre les performances obtenues avec une antenne à la réception, la figure 19 montre les performances avec deux antennes à la réception. Le récepteur utilise cinq itérations et les signaux reçus ont tous la même puissance moyenne. Les courbes référencées par L sont celles obtenues avec un turbo-égaliseur linéaire selon l'art antérieur. Les courbes référencées par WL sont celles obtenues avec un turbo-égaliseur linéaire au sens large selon l'invention. K est le nombre d'utilisateurs, autrement dit le nombre de signaux émis simultanément.

La turbo-égalisation linéaire avec $K = 1$ (mono-utilisateur) et à bas rapport signal à bruit a un gain sur la turbo-égalisation linéaire au sens large qui est dû au meilleur facteur de forme de la QPSK par rapport à la 4-PAM. Ce gain de facteur de forme disparaît si on considère une 4-PAM avec un turbo-égaliseur linéaire. Nous remarquons que, même en présence de gain de facteur de forme, dans le cas avec une antenne de réception, le turbo-égaliseur linéaire ne peut pas supporter deux utilisateurs avec un taux d'erreur paquet (PER) acceptable. En revanche, le turbo-égaliseur linéaire au sens large selon l'invention permet de décoder deux utilisateurs avec une dégradation de 3 dB par rapport au cas linéaire. Ce gain est dû à l'implémentation de l'égaliseur $\mathcal{G}_I$. Cela est dû aux formules (25) où $\mathbf{S}_2$ est non-nulle. En cas de récepteur linéaire $\mathbf{S}_2$ est nulle parce que la matrice de pseudo-covariance $\Sigma_{1,2}$ est imposée nulle.

Dans le cas avec récepteur doté de deux antennes les conclusions sont semblables. Pour un ou deux utilisateurs décodés simultanément, la méthode proposée de turbo-égalisation linéaire au sens large présente une perte de rapport signal à bruit d'environ 2 dB par rapport à la méthode de turbo-égalisation linéaire. Cependant, elle arrive à supporter plus d'utilisateurs qu'un récepteur linéaire standard, notamment 4 utilisateurs sans dégradation importante des performances en termes de taux d'erreur paquet.

Le procédé d'égalisation selon l'invention peut être mis en oeuvre par des moyens logiciels et/ou matériels. Il peut notamment être mis en oeuvre en tant que programme d'ordinateur comportant des instructions pour son exécution. Le programme d'ordinateur peut être enregistré sur un support d'enregistrement lisible par un processeur.

Le turbo-égaliseur selon l'invention peut notamment être mis en oeuvre sous la forme d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Références

[1] P. Chevalier, F. Pipon, "New Insights into Optimal Widely Linear Array Receivers for the Demodulation of BPSK, MSK, and GMSK Signals corrupted by Noncircular Interferences - Application to SAIC", IEEE Trans. on Signal Processing, v. 54, n. 3, pp: 870-883, March 2006.

[2] M. Tüchler, A. C. Singer, "Turbo Equalization: An Overview," IEEE Trans. Information Theory, vol. 57, no. 2, pp. 920-952, fevrier 2011.

[3] T. Li, W. Wang, and X. Gao, "Turbo equalization for LTE uplink under imperfect channel estimation," in Proc. IEEE 20th Int. Symp. Pers., Indoor Mobile Radio Commun., pp. 330-334, Sep. 2009.

[4] Zhongxia Pan, Gang Wu, Shu Fang, and Dengsheng Lin, "Practical soft-SIC détection for MIMO SC-FDMA system with co-channel interference", 2010 Int. Conférence on Wireless Communications and Signal Processing (WCSP 2012), pp. 1-5, 21-23 oct. 2010.

[5] S.-R. Lee, F.-B. Ueng, H.-F. Wang, and Y.-K. Chang, "Iterative multiuser détection for LDPC MIMO SC-FDMA communication systems", Wiley Trans Emerging Tel Tech. doi: 10.1002/ett.2773, 15 janvier 2014.

[6] G. Dietl, C. Mensing, W. Utschick, "Iterative Détection Based on Widely Linear Processing and Real-Valued Symbol Alphabets", 11th European Wireless Conférence 2005 - Next Génération Wireless and Mobile Communications and Services (European Wireless), Nicosia, Cyprus, avril 2005.

**Revendications**

1. Procédé d'égalisation, par au moins un filtre égaliseur, d'un signal reçu par une pluralité d'éléments antennaires, ledit signal reçu étant issu de la transmission de signaux émis par une pluralité d'émetteurs, ledit procédé comprenant :

   • Une étape de conversion du signal reçu dans le domaine fréquentiel,
   • Une étape de soustraction ($203_{k,m}$), audit signal, d'une estimée de l'interférence entre symboles et de l'interférence entre utilisateurs, de sorte à obtenir un signal correctif complexe,
   • Une étape de filtrage linéaire au sens large ($204_{k,m}$, 201) dudit signal correctif complexe et du signal correctif complexe conjugué conjointement pour obtenir un signal égalisé,
   • Une étape de conversion du signal correctif égalisé dans le domaine temporel,
   • Une étape de calcul de la matrice de covariance du signal reçu,
   • Une étape de calcul de la matrice de pseudo-covariance du signal reçu au moins à partir de la pseudo-covariance des symboles desdits signaux émis,
   • Une étape de calcul (101) des coefficients dudit au moins un filtre égaliseur à partir de la matrice de covariance et de la matrice de pseudo-covariance du signal reçu,

2. Procédé d'égalisation d'un signal reçu selon la revendication 1 comprenant en outre :

   • Une étape de soustraction ($203_{k,m}$, 200) audit signal reçu d'une estimée du signal émis et
   • Une étape (202) de combinaison du signal égalisé avec une estimée du signal émis,
   • L'étape ($204_{k,m}$, 201) de filtrage linéaire au sens large étant configurée pour produire, à partir d'un nombre $N_R$, égal au nombre d'éléments antennaires, de signaux correctifs complexes, un nombre K, égal au nombre de signaux émis, de signaux correctifs complexes égalisés.

3. Procédé d'égalisation d'un signal reçu selon la revendication 2 dans lequel l'étape de filtrage linéaire au sens large (201) comprend le filtrage (402) dudit signal correctif complexe par un premier filtre égaliseur ($G_I$) et du signal correctif complexe conjugué par un second filtre égaliseur ($G_Q$).

4. Procédé d'égalisation d'un signal reçu selon la revendication 2 dans lequel l'étape de filtrage linéaire au sens large (201) comprend le filtrage (410) dudit signal correctif complexe par un filtre égaliseur ($G_l$) et ledit procédé d'égalisation comporte en outre une étape (411) d'extraction de la partie réelle de chaque valeur du signal égalisé converti dans le domaine temporel.

5. Procédé d'égalisation d'un signal reçu selon la revendication 2 dans lequel l'étape de filtrage linéaire au sens large (201) comprend le filtrage (410) dudit signal correctif complexe par un filtre égaliseur ($G_l$) et ledit procédé d'égalisation comporte en outre une étape (412) d'extraction, alternativement, de la partie réelle ou de la partie imaginaire de chaque valeur successive du signal égalisé converti dans le domaine temporel.

6. Procédé d'égalisation d'un signal reçu selon l'une quelconque des revendications précédentes dans lequel l'étape de calcul (101) des coefficients du filtre égaliseur comporte au moins :

   • Une sous-étape (501) de calcul du filtre égaliseur dans le domaine fréquentiel et de calcul d'une estimée de l'amplitude des symboles du signal émis,
   • Une sous-étape (502) de calcul des covariances et pseudo-covariances du signal après égalisation.

7. Procédé de turbo-égalisation d'un signal reçu comprenant l'exécution itérative des étapes suivantes :

   • Une étape d'exécution du procédé d'égalisation d'un signal reçu selon l'une quelconque des revendications précédentes,
   • Une étape ($103_1$,... $103_K$) de transformation du signal égalisé en bits démodulés,
   • Une étape ($105_1$,... $105_K$) de décodage des bits démodulés,
   • Une étape ($102_1$,... $102_K$) de transformation des bits décodés en estimée du signal émis.

8. Utilisation du procédé d'égalisation d'un signal reçu selon l'une quelconque des revendications 1 à 6 ou du procédé de turbo-égalisation selon la revendication 7 appliqué à un signal modulé selon une constellation réelle, par exemple une constellation du type BPSK ou M-PAM.

9. Utilisation du procédé d'égalisation d'un signal reçu selon l'une quelconque des revendications 1 à 6 ou du procédé de turbo-égalisation selon la revendication 7 appliqué à un signal modulé selon une constellation alternativement réelle ou imaginaire, par exemple une constellation du type $\pi/2$ BPSK ou $\pi/2$ M-PAM.

10. Programme d'ordinateur comportant des instructions pour l'exécution du procédé d'égalisation d'un signal reçu selon l'une quelconque des revendications 1 à 6 ou du procédé de turbo-égalisation selon la revendication 7, lorsque le programme est exécuté par un processeur.

11. Récepteur comportant une pluralité d'éléments antennaires pour recevoir un signal émis par une pluralité d'émetteurs et un processeur configuré pour exécuter le procédé d'égalisation d'un signal reçu selon l'une quelconque des revendications 1 à 6 ou le procédé de turbo-égalisation selon la revendication 7.


**Patentansprüche**

1. Verfahren zum Entzerren eines von einer Vielzahl von Antennenelementen empfangenen Signals durch mindestens einen Entzerrfilter, wobei das empfangene Signal aus der Übertragung von Signalen stammt, die von einer Vielzahl von Sendern übertragen werden, wobei das Verfahren Folgendes umfasst:

   • einen Umwandlungsschritt des empfangenen Signals in dem Frequenzbereich,
   • einen Subtraktionsschritt ($203_{k,m}$) einer Schätzung der Interferenz zwischen Symbolen und der Interferenz zwischen Benutzern von dem Signal, um ein komplexes Korrektursignal zu erlangen,
   • einen gemeinsamen linearen Filterungsschritt im weiteren Sinne ($204_{k,m}$, 201) des komplexen Korrektursignals und des konjugierten komplexen Korrektursignals, um ein entzerrtes Signal zu erlangen,
   • einen Umwandlungsschritt des entzerrten Korrektursignals in dem Zeitbereich,
   • einen Berechnungsschritt der Kovarianzmatrix des empfangenen Signals,
   • einen Berechnungsschritt der Pseudokovarianzmatrix des empfangenen Signals mindestens ausgehend von der Pseudokovarianz der Symbole der übertragenen Signale,
   • einen Berechnungsschritt (101) der Koeffizienten des mindestens einen Entzerrfilters ausgehend von der Kovarianzmatrix und der Pseudokovarianzmatrix des empfangenen Signals.

2. Verfahren zum Entzerren eines empfangenen Signals nach Anspruch 1, ferner umfassend:

   • einen Subtraktionsschritt ($203_{k,m}$, 200) einer Schätzung des übertragenen Signals vom empfangenen Signal und
   • einen Schritt (202) zum Kombinieren des entzerrten Signals mit einer Schätzung des übertragenen Signals,
   • wobei der Schritt ($204_{k, m}$, 201) des linearen Filters im weiteren Sinne konfiguriert ist, um ausgehend von einer Anzahl $N_R$, die der Anzahl von Antennenelementen entspricht, komplexer Korrektursignale eine Anzahl K, die der Anzahl der übertragenen Signale entspricht, entzerrter komplexer Korrektursignale zu erzeugen.

3. Verfahren zum Entzerren eines empfangenen Signals nach Anspruch 2, wobei der lineare Filterungsschritt im weiteren Sinne (201) die Filterung (402) des komplexen Korrektursignals durch einen ersten Entzerrfilter ($\boldsymbol{G}_I$) und des komplexen Korrektursignals, das durch einen zweiten Entzerrfilter ($\boldsymbol{G}_Q$) konjugiert wird, umfasst.

4. Verfahren zum Entzerren eines empfangenen Signals nach Anspruch 2, wobei der lineare Filterschritt im weiteren Sinne (201) die Filterung (410) des komplexen Korrektursignals durch einen Entzerrfilter ($\boldsymbol{G}_I$) umfasst, und das Entzerrungsverfahren ferner einen Schritt (411) zum Extrahieren des tatsächlichen Teils von jedem Wert des umgewandelten entzerrten Signals in dem Zeitbereich umfasst.

5. Verfahren zum Entzerren eines empfangenen Signals nach Anspruch 2, wobei der lineare Filterschritt im weiteren Sinne (201) die Filterung (410) des komplexen Korrektursignals durch einen Entzerrfilter ($\boldsymbol{G}_I$) umfasst und das Entzerrungsverfahren ferner einen Schritt (412) zum abwechselnden Extrahieren des tatsächlichen oder imaginären Teils von jedem nachfolgenden Wert des umgewandelten entzerrten Signals in dem Zeitbereich umfasst.

6. Verfahren zum Entzerren eines empfangenen Signals nach einem der vorherigen Ansprüche, wobei der Berechnungsschritt (101) der Koeffizienten des Entzerrfilters mindestens Folgendes umfasst:

   • einen Teilschritt (501) zum Berechnen des Entzerrfilters in dem Frequenzbereich und zum Berechnen einer Schätzung der Amplitude der Symbole des übertragenen Signals,
   • einen Teilschritt (502) zum Berechnen der Kovarianzen und Pseudokovarianzen des Signals nach der Entzerrung.

7. Verfahren zur Turboentzerrung eines empfangenen Signals, umfassend die iterative Ausführung der folgenden Schritte:

   • einen Ausführungsschritt des Verfahrens zum Entzerren eines empfangenen Signals nach einem der vorherigen Ansprüche,
   • einen Schritt ($103_1$, ... $103_K$) zum Umwandeln des entzerrten Signals in demodulierte Bits,
   • einen Schritt ($105_1$, ... $105_K$) zur Dekodierung der demodulierten Bits,
   • einen Schritt ($102_1$, ... $102_K$) zum Umwandeln der dekodierten Bits in eine Schätzung des übertragenen Signals.

8. Verwendung des Verfahrens zum Entzerren eines empfangenen Signals nach einem der Ansprüche 1 bis 6 oder des Turboentzerrungsverfahrens nach Anspruch 7, das auf ein gemäß einer tatsächlichen Konstellation moduliertes Signal angewendet wird, beispielsweise eine Konstellation vom Typ BPSK oder M-PAM.

9. Verwendung des Verfahrens zum Entzerren eines empfangenen Signals nach einem der Ansprüche 1 bis 6 oder des Turboentzerrungsverfahrens nach Anspruch 7, das auf ein gemäß einer alternativ tatsächlichen oder imaginären Konstellation moduliertes Signal angewendet wird, beispielsweise eine Konstellation vom Typ n/2 BPSK oder n/2 M-PAM.

10. Computerprogramm, umfassend Anweisungen zum Ausführen des Verfahrens zum Entzerren eines empfangenen Signals nach einem der Ansprüche 1 bis 6 oder des Turboentzerrungsverfahrens nach Anspruch 7, wenn das Programm von einem Prozessor ausgeführt wird.

11. Empfänger mit einer Vielzahl von Antennenelementen zum Empfangen eines von einer Vielzahl von Sendern übertragenen Signals und einem Prozessor, der konfiguriert ist, um das Verfahren zum Entzerren eines empfangenen Signals nach einem der Ansprüche 1 bis 6 oder das Turboentzerrungsverfahren nach Anspruch 7 auszuführen.

**Claims**

1. A received signal equalization method using at least one equalizer filter to equalize a signal received by a plurality of antenna elements, said received signal being produced by the transmission of signals by a plurality of transmitters, said method including:

   • a step of converting the received signal into the frequency domain,
   • a step ($203_{k,m}$) of subtracting from said signal an estimate of the intersymbol interference and the interference between users so as to obtain a complex corrective signal,
   • a step ($204_{k,m}$, 201) of conjoint widely linear filtering of said complex corrective signal and the conjugate complex corrective signal to obtain an equalized signal,
   • a step of converting the equalized corrective signal into the time domain,
   • a step of calculating the covariance matrix of the received signal,
   • a step of calculating the pseudo-covariance matrix of the received signal at least from the pseudo-covariance of the symbols of said transmitted signals,
   • a step (101) of calculating coefficients of said at least one equalizer filter from the covariance matrix and the pseudo-covariance matrix of the received signal.

2. A received signal equalization method according to Claim 1 further including:

   • a step ($203_{k,m}$, 200) of subtracting from said received signal an estimate of the transmitted signal, and
   • a step (202) of combining the equalized signal with an estimate of the transmitted signal,
   • the step ($204_{k,m}$, 201) of widely linear filtering being configured to produce from a number $N_R$, equal to the number of antenna elements, of complex corrective signals, a number K, equal to the number of transmitted signals, of equalized complex corrective signals.

3. A received signal equalization method according to Claim 2 wherein the step (201) of widely linear filtering includes filtering (402) said complex corrective signal using a first equalizer filter ($G_I$) and the conjugate complex corrective signal using a second equalizer filter ($G_Q$).

4. A received signal equalization method according to Claim 2 wherein the step (201) of widely linear filtering includes filtering (410) said complex corrective signal using an equalizer filter ($G_I$) and said equalization method further includes a step (411) of extracting the real part of each value of the equalized signal converted into the time domain.

5. A received signal equalization method according to Claim 2 wherein the step (201) of widely linear filtering includes filtering (410) said complex corrective signal using an equalizer filter ($G_I$) and said equalization method further includes a step (412) of extracting alternately the real part or the imaginary part of each successive value of the equalized signal converted into the time domain.

6. A received signal equalization method according to any one of the preceding claims wherein the step (101) of calculating the coefficients of the equalizer filter includes at least:

   • a sub-step (501) of calculating the equalizer filter in the frequency domain and of calculating an estimate of the amplitude of the symbols of the transmitted signal,
   • a sub-step (502) of calculating the covariances and pseudo-covariances of the signal after equalization.

7. A method of turbo-equalization of a received signal including the iterative execution of the following steps:

   • a step of executing the method in accordance with any one of the preceding claims of equalizing a received signal,
   • a step ($103_1$,... $103_K$) of converting the equalized signal into demodulated bits,
   • a step ($105_1$,... $105_K$) of decoding the demodulated bits,
   • a step ($102_1$,... $102_K$) of converting the decoded bits into an estimate of the transmitted signal.

8. Use of the method according to any one of Claims 1 to 6 of equalizing a received signal or the turbo-equalization method according to Claim 7 applied to a signal modulated in accordance with a real constellation, for example a constellation of the BPSK or M-PAM type.

9. Use of the method according to any one of Claims 1 to 6 of equalizing a received signal or the turbo-equalization method according to Claim 7 applied to a signal modulated in accordance with an alternately real or imaginary constellation, for example a constellation of the $\pi/2$ BPSK or $\pi/2$ M-PAM type.

10. A computer program including instructions for executing the method in accordance with any one of Claims 1 to 6 of equalizing a received signal or the turbo-equalization method according to Claim 7 when the program is executed by a processor.

11. A receiver including a plurality of antenna elements for receiving a signal transmitted by a plurality of transmitters and a processor configured to execute the method according to any one of Claims 1 to 6 of equalizing a received signal or the turbo-equalization method according to Claim 7.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

EP 2 947 799 B1

200

$301_1$

$r_1$ ⊕ → $q_1$
−

⋮ ⋮

$301_{N_R}$

$r_{N_R}$ ⊕ → $q_{N_R}$
−

17 300

$E_{AP}[s_1]$ → | Rotation π/2 | → | DFT de taille M | → | Géné-ration signaux | $\hat{r}_1$

⋮ ⋮

17

$E_{AP}[s_K]$ → | Rotation π/2 | → | DFT de taille M | → $\hat{r}_{N_R}$

H

## FIG.16

201

401 410 411 $IDFT_1$ $412_1$

$q_1$ → | Concatenation | → | Filtrage multi-antenne | → | Segmentation | $Y_1$ → | IDFT de taille M | → | Extract on Alternée | → $y_1$

⋮

$IDFT_k$ $411_k$

$q_{N_R}$ → $Y_K$ → | IDFT de taille M | → | Extract on Alternée | → $y_K$

$G_l$

## FIG.17

39

Canal ETU MIMO Kx1, L et WL, 5eme itération

FIG.18

Canal ETU MIMO Kx2, L et WL, 5eme itération

FIG.19

EP 2 947 799 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Linear and widely linear filtering applied to iterative détection of generalized MIMO signais. **MELANIE WITZKE.** Annals of Telecommunications. Spirnger-Verlag
- Low-complexity iterative détection in multi-user MIMO ISI channels. **XIAOJUN YUAN.** IEEE signal processing letters. IEEE, vol. 15
- **P. CHEVALIER ; F. PIPON.** New Insights into Optimal Widely Linear Array Receivers for the Demodulation of BPSK, MSK, and GMSK Signals corrupted by Noncircular Interferences - Application to SAIC. *IEEE Trans. on Signal Processing,* Mars 2006, vol. 54 (3), 870-883
- **M. TÜCHLER ; A. C. SINGER.** Turbo Equalization: An Overview. *IEEE Trans. Information Theory,* Février 2011, vol. 57 (2), 920-952

- **T. LI ; W. WANG ; X. GAO.** Turbo equalization for LTE uplink under imperfect channel estimation. *Proc. IEEE 20th Int. Symp. Pers., Indoor Mobile Radio Commun.,* Septembre 2009, 330-334
- **ZHONGXIA PAN ; GANG WU ; SHU FANG ; DENGSHENG LIN.** Practical soft-SIC détection for MIMO SC-FDMA system with co-channel interference. *Int. Conférence on Wireless Communications and Signal Processing (WCSP 2012),* 2010, 1-5
- **S.-R. LEE ; F.-B. UENG ; H.-F. WANG ; Y.-K. CHANG.** Iterative multiuser détection for LDPC MIMO SC-FDMA communication systems. *Wiley Trans Emerging Tel Tech.,* 15 Janvier 2014
- **G. DIETL ; C. MENSING ; W. UTSCHICK.** Iterative Détection Based on Widely Linear Processing and Real-Valued Symbol Alphabets. *11th European Wireless Conférence 2005 - Next Génération Wireless and Mobile Communications and Services (European Wireless),* Avril 2005